# EUROPEAN PATENT APPLICATION

(11) **EP 1 080 756 A2**
(43) Date of publication of application: **07.03.2001**
(21) Application number: 00307631.2
(22) Date of filing: 04.09.2000
(51) Int. Cl.: A63F 13/10

(54) **Entertainment system, entertainment apparatus, recording medium, and program**

(30) Priority: 02.09.1999 JP 24935199
(71) Applicant: Sony Computer Entertainment Inc., Tokyo 107-0052 (JP)
(72) Inventor: Kaminagayoshi, Takehiro, Sony Comp. Entert. Inc., Tokyo 107-0052 (JP); Shimura, Yasuhiro, c/o Sony Comp. Entert. Inc., Tokyo 107-0052 (JP); Yoshimatsu, Katsunori, c/o Sony Comp. Entert. Inc., Tokyo 107-0052 (JP)
(74) Representative: Turner, James Arthur

(57) **Abstract**

A character indicator (220) indicative of the position of a principal character (200) displayed on a display monitor (18) and movable according to a control action made by the user is displayed in red, for example. An exit/entrance indicator (232) indicative of the position of an exit/entrance (226) of a scene displayed on the display monitor (18) is displayed in green, for example. An exit/entrance indicator (234) indicative of the position of an exit/entrance (228) of a store (206) related to the scene is displayed in blue, for example. An exit/entrance indicator (236) indicative of the position of an exit/entrance indicator (230) of an inn (208) where a parameter of the principal character (200) can be changed, e.g., the hit point of the principal character (200) can be recovered, is displayed in yellow, for example.

## Description

The present invention relates to an entertainment system, an entertainment apparatus for executing various programs, a recording medium which stores a program and data for use by the entertainment system, and a program itself.

Some entertainment systems including entertainment apparatus such as video game machines display video game images based on video game data stored in a recording medium such as a CD-ROM or the like on the display screen of a television receiver while allowing the user or game player to play the video game with commands entered via a manual controller.

In those entertainment systems, the entertainment apparatus and the manual controller are usually connected to each other by a serial interface. When a clock signal is supplied from the entertainment apparatus to the manual controller, the manual controller sends key switch information based on the user's control entries in synchronism with the clock signal.

Recently developed manual controllers incorporate a vibration generating means for applying vibrations to the user based on a request from an external apparatus such as an entertainment apparatus, for example. While a video game is in progress, the vibration generating means applies various different kinds of vibrations to the user in response to user's different control entries.

Video games that can be played on video game machines include role playing games, shooting games, driving games, combat games, and various other games.

When shooting games, driving games, and combat games are played, the game player who is skilled enough to enter command signals can quickly make actions in various scenes that the game player encounters because it is relatively simple to achieve goals in those games. However, the game player finds role playing games more difficult to play because various events take place in each scene and the games display many dark scenes where the principal character walks in mazes and dungeons.

In the role playing games, the game player needs to visually determine what objects are present in various scenes,- rather than being skilled enough to enter command signals. If the game player plays a role playing game for the first time, then when displayed scenes are changed, the game player is required to locate the position of the principal character in the new scene, spot an area from which the principal character has entered the scene, spot an area from which the principal character will leave the scene, and search for the positions of a store and an inn.

In dark scenes, it is difficult for the game players to identify those positions and areas. Therefore, the game player is likely to spend a long period of time to finish events in one scene.

Some role playing game players or users like to search one scene thoroughly. However, since the period of time available to a game player in one day is normally limited, it takes the game player several days to fully search a scene, with the result that the game player tends to get bored with the role playing game.

In order to make an event take place in one scene, the principal character needs to move to a predetermined spot and make a certain action. In some cases, unless the event occurs, the principal character cannot leave the scene.

Usually, such a process is not accounted for in the instruction manual, and can only be found by the game player while playing the game. The users or game players who even do not know that such an event occurs can do nothing but see one scene for a long period of time, and will eventually lose interest in the game.

Various respective aspects and features of the invention are defined in the appended claims.

Embodiments of the present invention can provide an entertainment system, an entertainment apparatus, a recording medium, and a program which visually teach the user where major spots are positioned in one scene and when an event occurs in the scene, and which allows the user to keep interest in a game if applied to the game.

According to an aspect of the present invention, there is provided an entertainment system comprising an entertainment apparatus for executing various programs, at least one manual controller for entering manual control requests from the user into the entertainment apparatus, a display unit for displaying images outputted from the entertainment apparatus, and indicator displaying means for displaying an indicator for visually assisting the user on the display unit.

According to another aspect of the present invention, there is provided an entertainment apparatus for connection to a manual controller for outputting at least a control request from the user and a display unit for displaying images, comprising indicator displaying means for displaying an indicator for visually assisting the user on the display unit.

According to still another aspect of the present invention, there is provided a recording medium storing a program and data for use in an entertainment system having an entertainment apparatus for executing various programs, at least one manual controller for entering manual control requests from the user into the entertainment apparatus, and a display unit for displaying images outputted from the entertainment apparatus, the program stored in the recording medium comprising the step of displaying an indicator for visually assisting the user on the display unit.

According to yet another aspect of the present invention, there is provided a program readable and executable by a computer, for use in an entertainment system having an entertainment apparatus for executing various programs, at least one manual controller connected to the entertainment apparatus for entering manual control requests from the user into the entertainment apparatus, and a display unit for displaying at least one object, the program comprising the step of displaying an indicator for visually assisting the user on the display unit.

If the entertainment system is applied to a system for playing a role playing game, then the user or game player can visually determine what objects are present in various scenes and can also expect what events will occur.

Therefore, the user is not required to move the principal character around in one scene, and can move the principal character adequately in anticipation of an event that will take plate in the scene.

Since the user is not required to move the principal character around in one scene or is free from undesirable situations where the user can do nothing but see one scene for a long period of time, the user can maintain interest in the role playing game. As a result, the present invention contributes to an increase in the popularity of role playing games.

The indicator displaying means may comprise means for displaying an indicator indicative of the position of a character displayed on the display unit and movable by a manual control request entered by the user. If a displayed color of the indicator changes as the character approaches a location where an event will occur, then the user finds it fun to play the role playing game.

For example, if the user is moving the principal character with a view to the occurrence of an event, e.g., engaging in a fight against a monster, then the user can expect that the event will take place soon by seeing the color of the indicator. If the user wants to move the principal character toward another location in order to avoid a battle with a monster, e.g., move the principal character toward an inn in order to recover the hit point of the principal character, then the user can move the principal character toward the other location while seeing the character indicator as it changes in a manner to avoid a battle with a monster.

Role playing games that have been available so far in the past are characterized by an essentially passive element for the user. In the conventional role playing games, the speed to achieve an aim by the user is largely governed by the existing scenario, and an aim may not be achieved often even in a long period of time. Such a passive element has been one of the reasons for the user to tend to lose interest in the conventional roll playing games.

According to the present invention, however, it is possible for the user to introduce an active element by choosing one of alternative actions. The speed to achieve an aim can be changed by a command from the user, and an aim can be achieved by the user without spending an undue long period of time. Therefore, an aim intended by the user, e.g., for the principal character to fight against the monster to win a trophy, or to move quickly to a next town without encountering the monster, can easily be achieved. As a result, the user does not lose interest in the role playing game.

The indicator displaying means or step may comprise means for or step of displaying indicators indicative of the positions of major spots in a scene displayed on the display unit. The major spots may include the exist/entrance of a scene displayed on the display unit, the exist/entrance of an object such as a store related to a scene displayed on the display unit, or a spot such as an inn where a parameter of the character can be changed.

The indicator displaying means or step may comprises mean for or step of displaying an indicator visually indicating that a special action can be made by the user. Specifically, the indicator displaying means or step may comprises mean for or step of displaying an indicator indicative of a branch to another event according to a decision action made by the user.

For example, when the principal character moves in one scene in a role playing game according to a control input entered by the user, an indicator is displayed in a location where an event will occur. Consequently, the user can expect an event to take place in the location where the indicator is displayed, and can be interested in the occurrence of the event.

The indicator displaying means or step may comprise means for or step of displaying different indicators in different colors. Therefore, the indicator indicative of the position of the character, the indicator indicative of the exit/entrance of the displayed scene, the indicator indicative of the exit/entrance of the object such as a store related to the displayed scene, the indicator indicative of the spot such as an inn where a parameter of the character can be changed, and the indicator indicative of a branch to another event according to a decision action made by the user can be displayed in different colors.

Accordingly, the user can identify a displayed indicator at once by recognizing its color, and is prevented from become confused by the simultaneous display of various different indicators.

The indicator displaying means or step may comprise means for or step of displaying an indicator indicative of a character displayed on the display unit and changing a displayed-color of the indicator as a parameter of the character is changed.

For example, while the principal character and a monster are fighting against each other, the user is able to know how much the hit point of the monster has been consumed based on the displayed color of the indicator, and can select an attach pattern depending on the indicated consumption of the hit point. If the principal character is surrounded by a number of monsters, then the user can select which one of the monsters is to be attacked first in view of the displayed colors of the indicators associated with the respective monsters. Consequently, those users or game players who are not good at fighting with monsters find it interesting to attack monsters.

The invention will now be described by way of example with reference to the accompanying drawings, throughout which like parts are referred to by like references, and in which:
FIG. 1 is a perspective view of an entertainment system according to the present invention;
FIG. 2 is a perspective view of a manual controller;
FIG. 3 is a plan view of the manual controller;
FIG. 4 is a perspective view showing the manner in which the manual controller is used;
FIG. 5 is a bottom view, partly broken away, of the manual controller, showing vibration imparting mechanisms disposed respectively in left and right grips;
FIG. 6 is a block diagram of a circuit arrangement of the entertainment apparatus;
FIG. 7 is a block diagram of the manual controller;
FIG. 8 is a block diagram of components for carrying out bidirectional serial communications between the manual controller and the entertainment apparatus;
FIG. 9 is a view showing a scene of a role playing game that is played on the entertainment system;
FIG. 10 is a view showing the manner in which the displayed color of a character indicator changes as a principal character approaches the position where a monster appears;
FIGS. 11A through 11D are views showing the manner in which the displayed color of the hit point indicator of a monster that is attacked changes as the hit point of the monster changes;
FIG. 12A is a view showing the manner in which the principal character moves down a road;
FIG. 12B is a view showing the manner in which an event branch indicator is displayed above the principal character;
FIG. 13A is a view showing the manner in which the doors of a box are opened and the principal character enters the box;
FIG. 13B is a view showing the manner in which the doors of the box are opened and the box moves upwardly;
FIG. 14A is a view showing the manner in which the principal character stands on a disk and another disk moves toward the disk;
FIG. 14B is a view showing the manner in which an event branch indicator is displayed above the principal character;
FIG. 15A is a view showing the manner in which the principal character jumps onto the other disk;
FIG. 15B is a view showing the manner in which the other disk with the principal character standing thereon moves away;
FIG. 16 is a functional block diagram of a indicator displaying means according to the present invention;
FIG. 17 is a functional block diagram of a key input processing means of the indicator displaying means;
FIG. 18 is a diagram showing details of a scene information table;
FIG. 19 is a diagram showing details of a scene switching flag;
FIG. 20 is a diagram showing details of a first indicator information table;
FIG. 21 is a diagram showing details of a second indicator information table;
FIG. 22 is a diagram showing details of a monster information table;
FIG. 23 is a diagram showing details of an appearance information table;
FIGS. 24 and 25 are a flowchart of a processing sequence of the indicator displaying means;
FIG. 26 is a flowchart of a processing sequence of an appearance information generating means;
FIG. 27 is a flowchart of a processing sequence of a character indicator displaying means;
FIG. 28 is a flowchart of a processing sequence of an exit/entrance indicator displaying means;
FIG. 29 is a flowchart of a processing sequence of a 3-sec. displaying means;
FIG. 30 is a flowchart of a processing sequence of an event branch indicator displaying means;
FIG. 31 is a flowchart of a processing sequence of a key input processing means;
FIG. 32 is a flowchart of a processing sequence of a principal character movement processing means;
FIG. 33 is a flowchart of a processing sequence of a battle mode processing means;
FIG. 34 is a flowchart of a processing sequence of a mode switching means; and
FIG. 35 is a flowchart of a processing sequence of an event branch processing means.

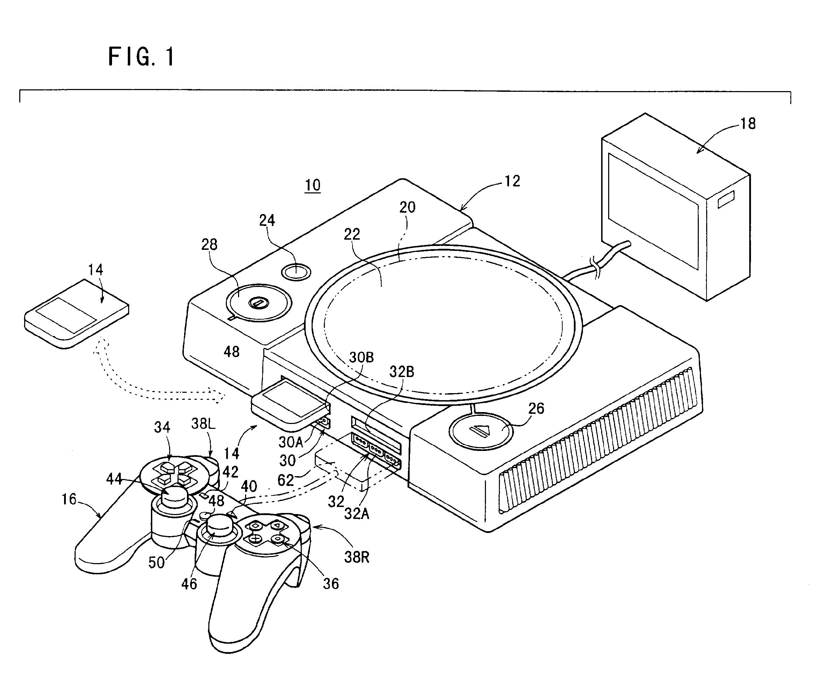

An entertainment system according to the present invention as applied to a video game apparatus, and a recording medium according to the present invention as applied to a recording medium which stores a program and data executed by the video game apparatus will be described below with reference to FIGS. 1 through 35.

As shown in FIG. 1, an entertainment system 10 basically comprises an entertainment apparatus 12 for executing various programs, a memory card 14 detachably connected to the entertainment apparatus 12, a manual controller 16 detachably connected to the entertainment apparatus 12 by a connector 62, and a display monitor 18 such as a television receiver which is supplied with video and audio output signals from the entertainment apparatus 12.

The entertainment apparatus 12 reads a program recorded in a mass storage medium such as an optical disk 20 such as a CD-ROM or the like, and executes a game, for example, based on the program depending on commands supplied from the user, e.g., the game player, via the manual controller 16. The execution of the game mainly represents controlling the progress of the game by controlling the display of images and the generation of sounds on the display monitor 18 based on manual input actions entered from the manual controller 16 via the connector 62.

The entertainment apparatus 12 has a substantially flat casing in the shape of a rectangular parallelepiped which houses a disk loading unit 22 disposed centrally for loading an optical disk 20 for supplying an application program and data for a video game or the like. The casing supports a reset switch 24 for resetting a program which is being presently executed, a disk control switch 26 for controlling the loading of the optical disk 20, a power supply switch 28, and two slots 30, 32.

The entertainment apparatus 12 may be supplied with the application program via a communication link, rather than being supplied from the optical disk 20 as the recording medium.

The slots 30, 32 have respective upper slot units 30B, 32B and respective lower slots units 30A, 32A. Two manual controllers 16 may be connected respectively to the lower slots units 30A, 32A, and memory cards 14 or portable information terminals (not shown) having the function of the memory card 14 for storing flags indicative of interim game data may be connected respectively to the upper slots units 30B, 32B. The slots 30, 32 (the upper slot units 30B, 32B and the lower slots units 30A, 32A) are asymmetrically shaped to prevent the connectors 62 and the memory cards 14 from being inserted in the wrong direction.

As shown in FIG. 1, the manual controller 16 has first and second control pads 34, 36, an L (Left) button 38L, an R (Right) button 38R, a start button 40, and a selection button 42. The manual controller 16 also has joysticks 44, 46 for inputting analog control actions, a mode selection switch 48 for selecting control modes of the joysticks 44, 46, and a mode indicator 50 for indicating a selected control mode. The mode indicator 50 comprises a light-emitting element such as a light-emitting diode or the like.

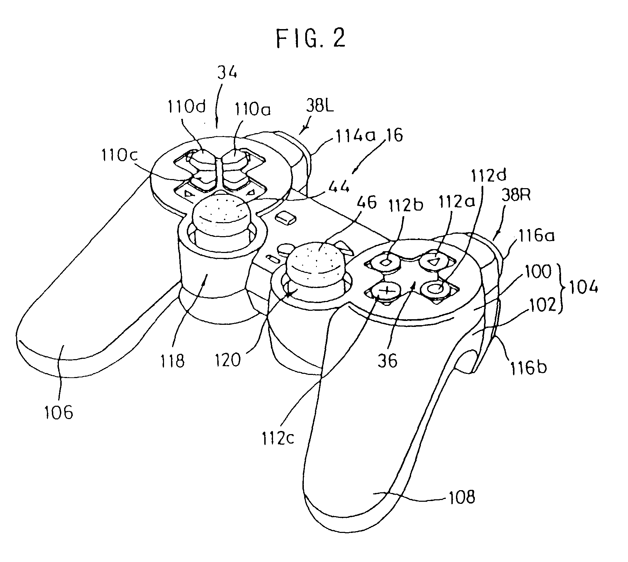

As shown in FIG. 2, the manual controller 16 has a housing 104 comprising an upper member 100 and a lower member 102 which are mated and joined to each other by fasteners such as screws.

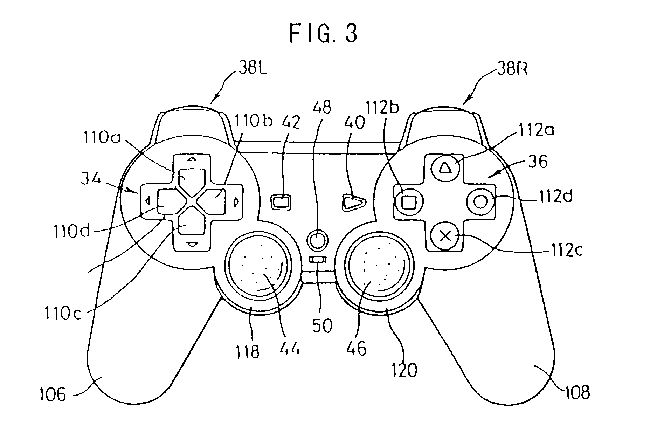

As shown in FIGS. 2 and 3, a pair of left and right grips 106, 108 projects from one side of respective opposite ends of the housing 104. The left and right grips 106, 108 are shaped so as to be gripped by the palms of left and right hands of the user or game player when the manual controller 16 is connected to the entertainment apparatus 12 and information retrieval is carried out or the game is played thereby, for example.

As shown in FIG. 3, the left and right grips 106, 108 are progressively spaced away from each other toward their distal ends. To allow the game player to grip the left and right grips 106, 108 comfortably for a long period of time, the left and right grips 106, 108 are tapered from their joint with the housing 104 toward their distal ends, and have arcuate outer peripheral surfaces and arcuate distal end surfaces.

As shown in FIGS. 2 and 3, the first control pad 34 is disposed on one end of the housing 104 and comprises a first pressable control member (up button) 110a, a second pressable control member (right button) 110b, a third pressable control member (down button) 110c, and a fourth pressable control member (right button) 110d. The first through fourth pressable control members 110a, 110b, 110c, 110d project on an upper surface of the housing 104 and are arranged in a crisscross pattern.

The first control pad 34 includes switch elements as signal input elements associated respectively with the first through fourth pressable control members 110a, 110b, 110c, 110d. The first control pad 34 functions as a directional controller for controlling the direction of movement of a displayed game character, for example. When the game player selectively presses the first through fourth pressable control members 110a, 110b, 110c, 110d to turn on or off the switch elements associated respectively with the first through fourth pressable control members 110a, 110b, 110c, 110d, the displayed game character moves in the direction corresponding to the pressed one of the first through fourth pressable control members 110a, 110b, 110c, 110d.

As shown in FIGS. 1 and 2, the second control pad 36 is disposed on the other end of the housing 104 and comprises a first pressable control member (Δ button) 112a, a second pressable control member (□ button) 112b, a third pressable control member (× button) 112c, and a fourth pressable control member (○ button) 112d. The first through fourth pressable control members 112a, 112b, 112c, 112d project on the upper surface of the housing 104 and are arranged in a crisscross pattern.

The first through fourth pressable control members 112a, 112b, 112c, 112d are constructed as independent members, and associated with respective switch elements disposed in the second control pad 36.

The second control pad 36 serves as a function setting/performing unit for setting functions for a displayed game character assigned to the pressable control members 112a - 112d or performing functions of a displayed game character when the switch elements associated with the pressable control members 112a - 112d are turned on.

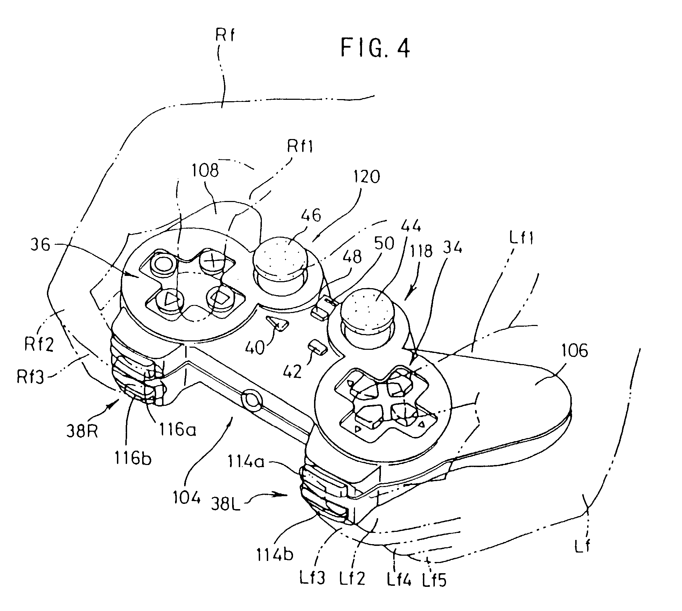

The L button 38L and the R button 38R are disposed on a side of the housing 104 remote from the left and right grips 106, 108 and positioned respectively at the opposite ends of the housing 104. As shown in FIGS. 2 and 4, the L button 38L has a first left pressable control member (L1 button) 114a and a second left pressable control member (L2 button) 114b, and the R button 38R has a first right pressable control member (R1 button) 116a and second right pressable control member (R2 button) 116b, respectively. The L button 38L and the R button 38R have respective switch elements associated respectively with the pressable control members (the L1 button 114a, the L2 button 114b, the R1 button 116a, and the R2 button 116b).

The L button 38L and the R button 38R serve as respective function setting/performing units for setting functions for a displayed game character assigned to the pressable control members 114a, 114b and 116a, 116b or performing functions of a displayed game character when the switch elements associated with the pressable control members 114a, 114b and 116a, 116b are turned on.

As shown in FIGS. 2 and 3, the manual controller 16 also has first and second analog control pads 118, 120 disposed respectively at confronting corners defined between the housing 104 and the proximal ends of the left and right grips 106, 108 which are joined to the housing 104.

The first and second analog control pads 118, 120 have the respective joysticks 44, 46 which can be tilted in all directions (360°) about control shafts thereof, and respective signal input elements such as variable resistors or the like which are operable by the respective joysticks 44, 46. Specifically, the control shafts of the left and right joysticks 44, 46 are normally urged to return to their neutral positions by biasing members. The left and the right joysticks 44, 46 can be freely tilted in all directions (360°) about the axes of the control shafts.

The first and second analog control pads 118, 120 can move a displayed game character while rotating the same or while changing its speed, and can make an analog-like action such as to change the form of a displayed character, when the game player manipulates the joysticks 44, 46. Therefore, the first and second analog control pads 118, 120 are used as a control unit for entering command signals for a displayed character to perform the above movement or action.

When the mode selection switch 48 is pressed, it can select a control mode for allowing a command signal to be inputted from the first and second analog control pads 118, 120 or a control mode for inhibiting a command signal from being inputted from the first and second analog control pads 118, 120.

When the mode selection switch 48 is pressed, it can also select a control mode for allowing a command signal to be inputted from the first and second analog control pads 118, 120 and selecting the function of the first through fourth pressable control members 112a, 112b, 112c, 112d of the second control pad 36 or the function of the pressable control members 114a, 114b and 116a, 116b of the L button 38L and the R button 38R. Depending on the control mode selected by the mode selection switch 48, the mode indicator 50 flickers and changes its indication light.

As shown in FIG. 4, the left and right grips 106, 108 projecting from the housing 104 are gripped respectively by the palms of the hands of the game player. The housing 104 is not required to be supported by fingers, and the manual controller 16 can be held by the hands while at least six out of the ten fingers of the hands can freely be moved.

As shown in FIG. 4, when the first and second grips 106, 108 are gripped respectively by the palms of the hands of the game player, the thumbs Lf1, Rf1 of the left and right hands can extend over the joysticks 44, 46 of the first and second analog control pads 118, 120, the first through fourth pressable control members 110a - 110d of the first control pad 34, and the first through fourth pressable control members 112a - 112d of the second control pad 36, and can selectively press the joysticks 44, 46, the pressable control members 110a - 110d, and the pressable control members 112a - 112d.

Since the joysticks 44, 46 of the first and second analog control pads 118, 120 are positioned in confronting relation to the proximal ends of the left and right grips 106, 108 which are joined to the housing 104, when the left and right grips 106, 108 are gripped by the left and right hands, the joysticks 44, 46 are positioned most closely to the thumbs Lf1, Rf1, respectively. Therefore, the joysticks 44, 46 can easily be manipulated by the thumbs Lf1, Rf1.

As shown in FIG. 4, when the left and right grips 106, 108 are gripped respectively by the palms of the hands of the game player, the index fingers Lf2, Rf2 and middle fingers Lf3, Rf3 of the left and right hands can extend over positions where they can selectively press the L1 button 114a, L2 button 114b of the L button 38L and R1 button 116a, R2 button 116b of the R button 38R.

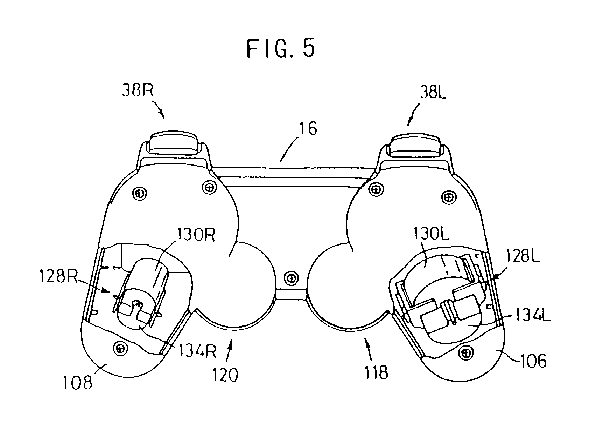

As shown in FIG. 5, the manual controller 16 has a pair of vibration imparting mechanisms 128L, 128R for imparting vibrations to the user in order for the user to be able to play a highly realistic game.

As shown in FIG. 5, the left and right vibration imparting mechanisms 128L, 128R are positioned near the proximal ends of the left and right grips 106, 108 that are held by the hands and fingers when the manual controller 16 is gripped by the user.

Since the both vibration imparting mechanisms 128L, 128R have basically the same structure except their vibration characteristics, only the right vibration imparting mechanism 128R will be described for the purpose of brevity.

The vibration imparting mechanisms 128R comprises a motor 130R energizable by a vibration generating command supplied from the entertainment apparatus 12, and an eccentric member 134R mounted eccentrically on the drive shaft of the motor 130R.

The eccentric member 134R comprises a weight in the form of a heavy metal member having a semicircular cross-sectional shape. The weight has an off-center hole defined therein in which the drive shaft of the motor 130R is fitted.

According to the vibration imparting mechanisms 128L, 128R as constructed above, when the motors 130L, 130R are energized, the drive shafts thereof rotate to cause the eccentric members 134L, 134R to rotate in an eccentric motion for thereby generating vibrations, which are imparted to the left grip 106 and the right grip 108. Then, the vibrations of the left grip 106 and the right grip 108 are applied to the hands and fingers of the user.

Next, the vibration characteristics of the vibration imparting mechanisms 128L, 128R disposed in the left grip 106 and the right grip 108 respectively will be described hereinbelow.

The vibration imparting mechanisms 128L, 128R have the different vibration characteristics.

For example, the motor 130L of the left vibration imparting mechanism 128L is bigger than the motor 130R of the right vibration mechanism 128R. The rotational speed of the motor 130L varies according to a vibration value included in a vibration generating command transmitted from the entertainment apparatus 12. That is, vibrations having different frequencies can be generated depending on the vibration value. In the present embodiment, the vibration frequency of the motor 130L varies in proportion to the vibration value.

In contrast to the motor 130L of the left vibration mechanism 128L, the vibration frequency of the motor 130R of the right vibration mechanism 128R does not vary according to the vibration value included in the vibration generating command. The motor 130R of the right vibration mechanism 128R is simply either energized or de-energized according to the vibration value. If the vibration value (logic value) is "1", the motor 130R of the right vibration mechanism 128R is energized. If the vibration value is "0", the motor 130R of the right vibration mechanism 128R is de-energized. When the motor 130R of the right vibration mechanism 128R is energized, it rotates at a constant speed to generate vibrations at a constant frequency.

In order to energize the motors 130L, 130R to vibrate the manual controller 16 in its entirety, a bidirectional communication function needs to be provided between the manual controller 16 and the entertainment apparatus 12. This bidirectional communication function will be described later on.

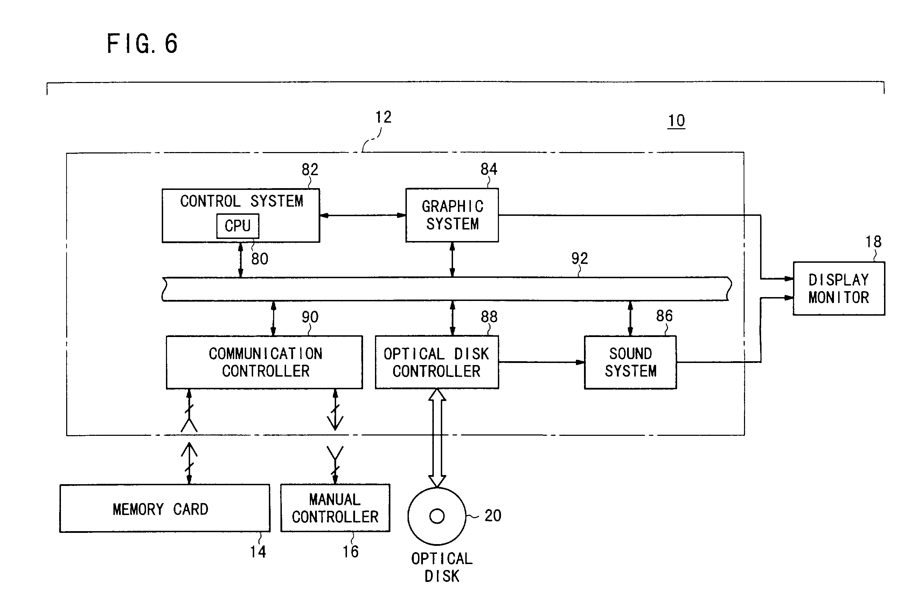

Now, circuit arrangements of the entertainment apparatus 12 and the manual controller 16 will be described below with reference to FIGS. 6 through 8.

As shown in FIG. 6, the entertainment apparatus 12 comprises a control system 82 including a central processing unit (CPU) 80 and peripheral devices thereof, a graphic system 84 including a frame buffer (not illustrated) and a graphic processing unit (GPU) for rendering image data in the frame buffer, a sound system 86 including a sound processing unit (SPU) for generating music sounds and sound effects, an optical disk controller 88 for controlling the readout of the optical disk 20 in which application programs and data are stored, a communication controller 90 for controlling the inputting of data into and outputting of data from the manual controller 16 and the memory card 14, and a system bus 92 to which the control system 82, the graphic system 84, the sound system 86, the optical disk controller 88, and the communication controller 90 are connected.

Video and audio signals generated by and outputted from the graphic system 84 and the sound system 86 are supplied to the display monitor 18 to display images on the monitor screen of the display monitor 18 and reproduce sounds from the speakers of the display monitor 18.

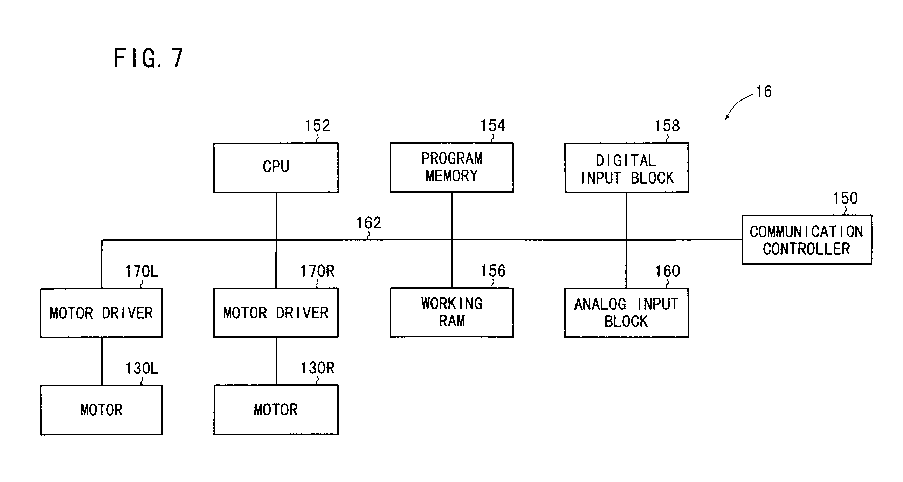

As shown in FIG. 7, the manual controller 16 comprises a communication controller 150, a CPU 152, a program memory 154, a working RAM 156, a digital input block 158, an analog input block 160, the left motor driver 170L, the left motor 130L, the right motor driver 170R, and the right motor 130R. These components of the manual controller 16 are connected to a bus 162.

The digital input block 158 functions as a manual input controller for the first through fourth pressable control members 110a - 110d of the first control pad 34 and the first through fourth pressable control members 112a - 112d of the second control pad 36. The analog input block 160 functions as a manual input controller for the left and right joysticks 44, 46. The digital input block 158 and the analog input block 160 allow the user to enter various items of information into the manual controller 16.

The communication controller 150 has a function to effect serial communications with an external device. The communication controller 150 is electrically connectable to the communication controller 90 of the entertainment apparatus 12 (see FIG. 6), for example, for data communication with the entertainment apparatus 12.

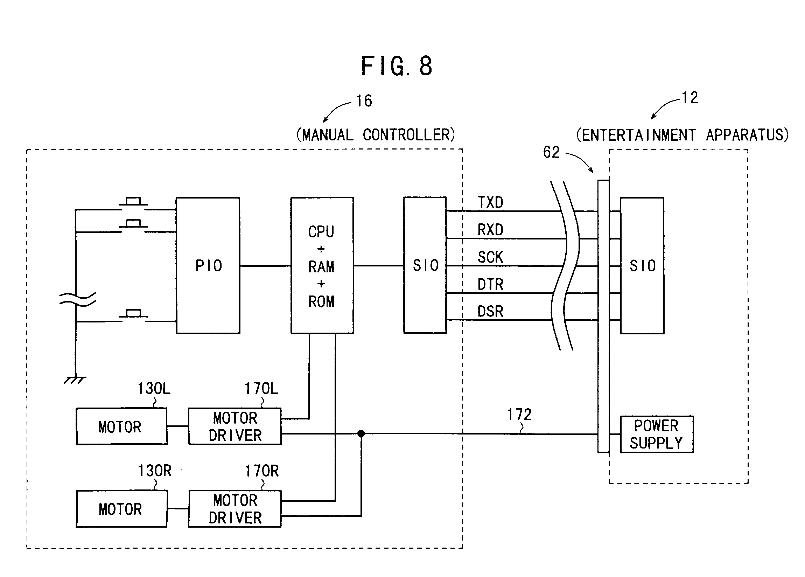

As shown in FIG. 8, the bidirectional communication function between the entertainment apparatus 12 and the manual controller 16 can be performed when the connector 62 capable of performing bidirectional serial communications with the manual controller 16 is connected to the entertainment apparatus 12.

A system in the manual controller 16 for performing the bidirectional communication function comprises a serial I/O interface SIO for performing serial communication with the entertainment apparatus 12, a parallel I/O interface PIO for entering manipulation data from a plurality of control buttons, a one-chip microcomputer comprising a CPU, a RAM, and a ROM, and the motor drivers 170R, 170L for energizing the motors 130R, 130L of the vibration imparting mechanisms 128R, 128L. The motors 130R, 130L are energized for rotation by voltages and currents supplied from the corresponding motor drivers 170R, 170L.

A system in the entertainment apparatus 12 for performing the bidirectional communication function comprises a serial I/O interface SIO for performing serial communication with the manual controller 16. When the connector 62 is connected to the serial I/O interface SIO of the entertainment apparatus 12, the serial I/O interface SIO of the entertainment apparatus 12 is connected to the serial I/O interface SIO of the manual controller 16 via the connector 62 for performing bidirectional communications between the manual controller 16 and the entertainment apparatus 12. Other structural details of the entertainment apparatus 12 are omitted from illustration in FIG. 8.

Signal and control lines for bidirectional serial communications include a data transfer signal line TXD (Transmit X' for Data) for sending data from the entertainment apparatus 12 to the manual controller 16, a data transfer signal line RXD (Received X' for Data) for sending data from the manual controller 16 to the entertainment apparatus 12, a serial synchronous clock signal line SCK (Serial Clock) for extracting data from the data transfer signal lines TXD, RXD, a control line DTR (Data Terminal Ready) for establishing and cutting off communication with the manual controller 16 as a terminal, and a flow control line DSR (Data Set Ready) for transferring a large amount of data.

The signal and control lines for bidirectional serial communication are accommodated in a cable. As shown in FIG. 8, this cable further includes a power line 172 extending from a power supply in the entertainment apparatus 12 and connected to the motor drivers 170R, 170L in the manual controller 16 for supplying electric energy to energize the motors 130R, 130L.

A process of bidirectional serial communication between the manual controller 16 and the entertainment apparatus 12 will be described below. In order for the entertainment apparatus 12 to communicate with the manual controller 16 to read manipulation data from the digital input block 158 and the analog input block 160, the entertainment apparatus 12 first outputs selection data to the control line DTR. As a result, the manual controller 16 confirms that it is selected by the control line DTR, and then waits for a signal from the signal line TXD. Then, the entertainment apparatus 12 outputs an identification code indicative of the manual controller 16 to the data transfer signal line TXD. The manual controller 16 receives the identification code from the signal line TXD.

When the manual controller 16 recognizes the identification code, the manual controller 16 starts communicating with the entertainment apparatus 12. The entertainment apparatus 12 sends manipulation data via the data transfer signal line TXD to the manual controller 16, which sends the manipulation data from the digital input block 158 and the analog input block 160 to the entertainment apparatus 12 via the data transfer signal line RXD. In this manner, the entertainment apparatus 12 and the manual controller 16 perform bidirectional serial communications. The bidirectional serial communications will be finished when the entertainment apparatus 12 outputs selection stop data via the control line DTR.

With the bidirectional serial communication function, the manual controller 16 can send mainly manipulation data from the digital input block 158 and the analog input block 160 to the entertainment apparatus 12, and the entertainment apparatus 12 can send a vibration generating command for energizing the motors 130R, 130L of the vibration imparting mechanisms 128R, 128L via the data transfer signal line TXD to the manual controller 16.

The vibration generating command for energizing the motors 130R, 130L has been established in advance in the optical disk 20 set in the entertainment apparatus 12. Alternatively, the vibration generating command is generated by the entertainment apparatus 12.

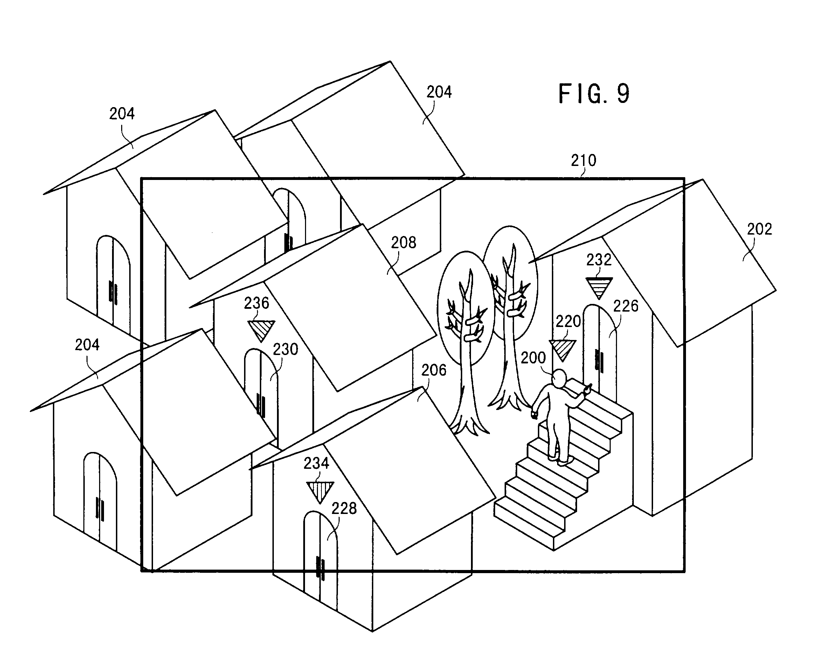

Characteristic functions of the entertainment system 10 according to the present embodiment will be described below with reference to FIGS. 9 through 29.

The characteristic functions display various indicators for visually assisting the user in playing a game on the display monitor 18.

Specifically, FIG. 9 shows the image of a scene in a role playing game. In the scene, a principal character 200 walks up the steps in front of a building 202 at night. The image also includes houses 204, a store 206, and an inn 208 other than the building 202. In the image, the inn 208 and the store 206 are vaguely seen because the scene is dark and many buildings are included in the scene.

The image shown in FIG. 9 is rendered in the frame buffer in the graphic system 84 (see FIG. 6). The image includes a frame 210 indicating a display range that is actually displayed on the display monitor 18. The frame 210 is movable in unison with the principal character 200.

The characteristic functions include four functions. The first function is to display a indicator 220 for indicating the position of the principal character 200 that is moved by the user with the manual controller 16. This indicator 220 will hereinafter be referred to as "character indicator 220". The character indicator 220 is substantially in the shape of an inverted triangle.

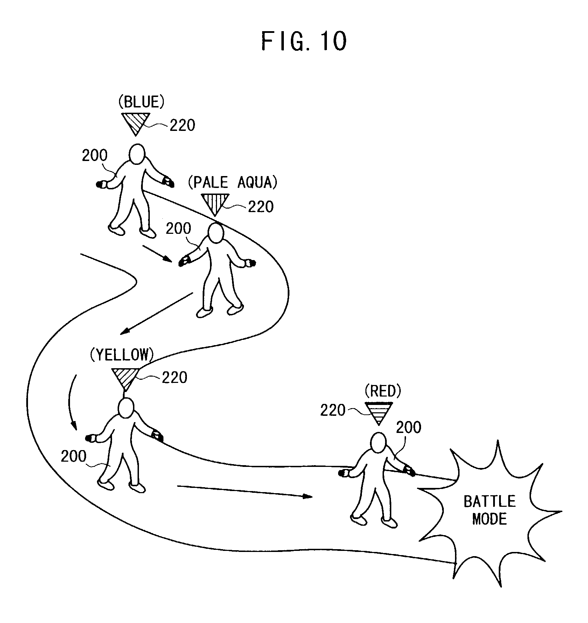

In scenes such as an urban area (see FIG. 9) and an indoor area where no monsters appear, the character indicator 220 is displayed in red, for example. In a field where a monster appears as shown in FIG. 10, the character indicator 220 is displayed in blue.

In the field, particularly, the color of the character indicator 220 changes depending on the distance between the principal character 200 and the position where a monster appears. For example, as the principal character 200 approaches the position where a monster appears, the color of the character indicator 220 changes from "blue" to "pale aqua" to "yellow" to "red". As the principal character 200 further approaches the position where a monster appears, the monster appears, and a battle is initiated between the principal character 200 and the monster in a battle mode. The color of the character indicator 220 may change in three stages, e.g., from "blue" to "yellow" to "red".

According to the first function, when the user moves the principal character 200 with a view to making an event occur, e.g., waging a battle with the monster, the user can expect the battle to begin soon by seeing the color of the character indicator 220 as it changes.

If the user wants to move the principal character 200 toward another location in order to avoid a battle with the monster, e.g., move the principal character 200 toward the inn 208 (see FIG. 9) in order to recover the hit point of the principal character 200, then the user can move the principal character 200 toward the other location while seeing the character indicator 220 as it changes in a manner to avoid a battle with the monster.

Role playing games that have been available so far in the past are characterized by an essentially passive element for the user. In the conventional role playing games, the speed to achieve an aim by the user is largely governed by the existing scenario, and an aim may not be achieved often even in a long period of time. Such a passive element has been one of the reasons for the user to tend to lose interest in the conventional roll playing games.

According to the first function, however, it is possible for the user to introduce an active element by choosing one of alternative actions, e.g., waging a battle with the monster or avoiding a conflict with the monster. The speed to achieve an aim can be changed by a command from the user, and an aim can be achieved by the user without spending an undue long period of time. Therefore, an aim intended by the user, e.g., for the principal character to fight against the monster to win a trophy, or to move quickly to a next town without encountering the monster, can easily be achieved. As a result, the user does not lose interest in the role playing game.

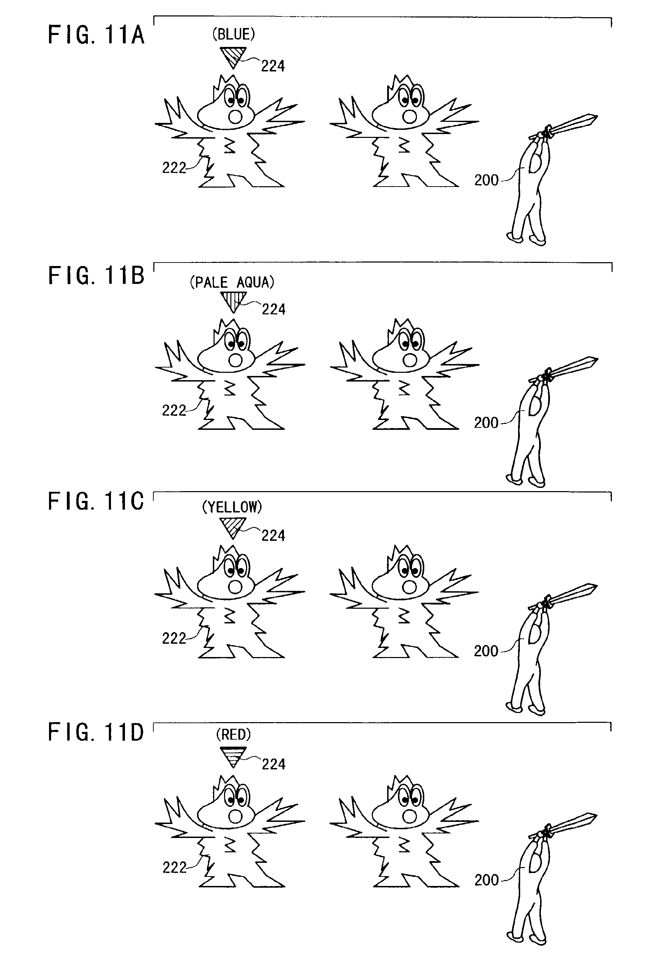

The second function is concerned with a indicator displaying process within the battle mode. As shown in FIGS. 11A through 11D, a hit point indicator 224 is displayed near a monster 222 to be attacked which is selected by the principal character 200, and the color of the hit point indicator 224 changes depending on the hit point of the monster 222 to be attacked. The hit point of the monster refers to the ability of the monster to withstand an attack waged on the monster. The hit point indicator 224 is substantially in the shape of an inverted triangle.

The hit point indicator 224 can be displayed in four different colors. Specifically, if the hit point is consumed by 0 % to 25 %, then the hit point indicator 224 is displayed in "blue". If the hit point is consumed by 26 % to 50 %, then the hit point indicator 224 is displayed in "pale aqua". If the hit point is consumed by 51 % to 75 %, then the hit point indicator 224 is displayed in "yellow". If the hit point is consumed by 76 % to 99 %, then the hit point indicator 224 is displayed in "red". Alternatively, the hit point indicator 224 may be displayed in three different colors. In such a modification, if the hit point is consumed by 0 % to 50 %, then the hit point indicator 224 is displayed in "blue". If the hit point is consumed by 51 % to 75 %, then the hit point indicator 224 is displayed in "yellow". If the hit point is consumed by 76 % to 99 %, then the hit point indicator 224 is displayed in "red".

According to the second function, while the principal character 200 and the monster 222 are fighting against each other, the user is able to know how much the hit point of the monster 222 has been consumed based on the displayed color of the hit point indicator 224, and can select an attach pattern depending on the indicated consumption of the hit point. If the principal character 200 is surrounded by a number of monsters 222, then the user can select which one of the monsters 222 is to be attacked first in view of the displayed colors of the hit point indicators 224 associated with the respective monsters 222. Consequently, those users or game players who are not good at fighting with monsters 222 find it interesting to attack monsters 222.

The third function is to display indicators indicative of the positions of major objects in a displayed scene. The major objects may include, as shown in FIG. 9, an exit/entrance 226 of a scene, an exit/entrance 228 of the store 206, and an exit/entrance 230 of the inn 208. Indicators (hereinafter referred to as "exit/entrance indicators") 232, 234, 236 indicative of those exits/entrances are displayed near the exit/entrance 226, the exit/entrance 228, and the exit/entrance 230. These exit/entrance indicators 232, 234, 236 are substantially in the shape of an inverted triangle.

According to the third function, the exit/entrance indicators 232, 234, 236 are displayed in different colors, respectively. For example, the exit/entrance indicator 232 of the scene is displayed in "green", the exit/entrance indicator 234 of the store 206 in "blue", and the exit/entrance indicator 236 of the inn 208 in "yellow".

While a role playing game is being played on the entertainment system 10, when the principal character 200 walks through the exit/entrance 226 of the scene, the scene changes to another scene. Therefore, the exit/entrance 226 of the scene is a place required to lead the principal character 200 to another scene.

The exit/entrance 228 of the store 206 is a place where the principal character 200 replenishes medicine and arms and exchanges them for money. When the principal character 200 enters one scene, the exit/entrance 228 of the store 206 is a place that the principal character 200 wants to necessarily visit once.

The exit/entrance 230 of the inn 208 is an important place where the hit power of the principal character 200 who has been worn by battles and travel can be recovered. When the principal character 200 enters one scene, the exit/entrance 230 of the inn 208 is a place that the principal character 200 needs to confirm of necessity.

According to the third function, the user can easily confirm the above important places with the exit/entrance indicators 232, 234, 236 displayed in different colors. Since the user can visually identify major objects and their positions in each of the scenes, it is not necessary to move the principal character 200 around in the scenes.

According to the first and third functions, the user can operate the L1 button 114a and R1 button 116a to switch between different display modes for the character indicator 220 and the exit/entrance indicators 232, 234, 236.

These different display modes include a continued display mode in which the character indicator 220 and the exit/entrance indicators 232, 234, 236 are continuously displayed, a 3-sec. display mode in which the character indicator 220 and the exit/entrance indicators 232, 234, 236 are displayed for only 3 seconds each time scenes are changed, and a non-display mode in which the character indicator 220 and the exit/entrance indicators 232, 234, 236 are not displayed.

According to the first and third functions, the non-display mode is initially selected. Each time the L1 button 114a, for example, is pressed, the non-display mode changes to the 3-sec. display mode, the 3-sec. display mode changes to the continued display mode, and the continued display mode changes to the non-display mode. Each time the R1 button 116a is pressed, the non-display mode changes to the continued display mode, the continued display mode changes to the 3-sec. display mode, and the 3-sec. display mode changes to the non-display mode.

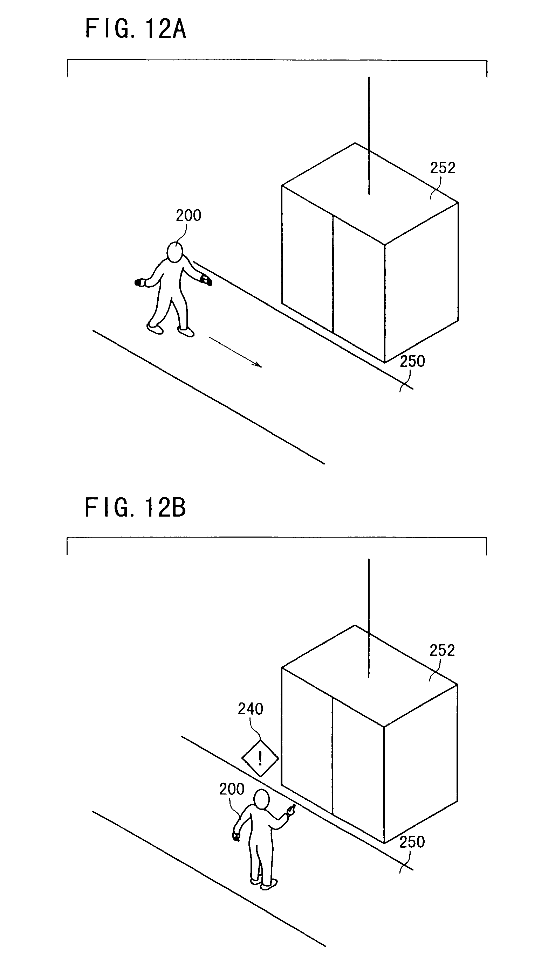

The fourth function is performed to display a indicator for letting the user know that a special action can be made. Specifically, the fourth function displays a indicator 240 (see FIG. 12B) for branching off from an event to another event in response to a decision action made by the user. The indicator 240 will hereinafter be referred to as "event branch indicator 240".

Specifically, while the principal character 200 in the role playing game is moving in a scene according to an input control action made by the user, the event branch indicator 240 is displayed at a location where an event will occur. The user is now alerted to an event that is to take place at the location where the event branch indicator 240 is displayed, and can have interest in the occurrence of the event.

For example, FIG. 12A shows the displayed image of a scene in which the principal character 200 walks down a road 250, and a large box 252 capable of holding several people therein is placed ahead of the principal character 200. As shown in FIG. 12B, when the principal character 200 is positioned in front of the box 252, the event branch indicator 240, which is substantially lozenge-shaped, together with an exclamation mark, is displayed above the head of the principal character 200. At this time, seeing the event branch indicator 240, the user can expect that an event is about to occur.

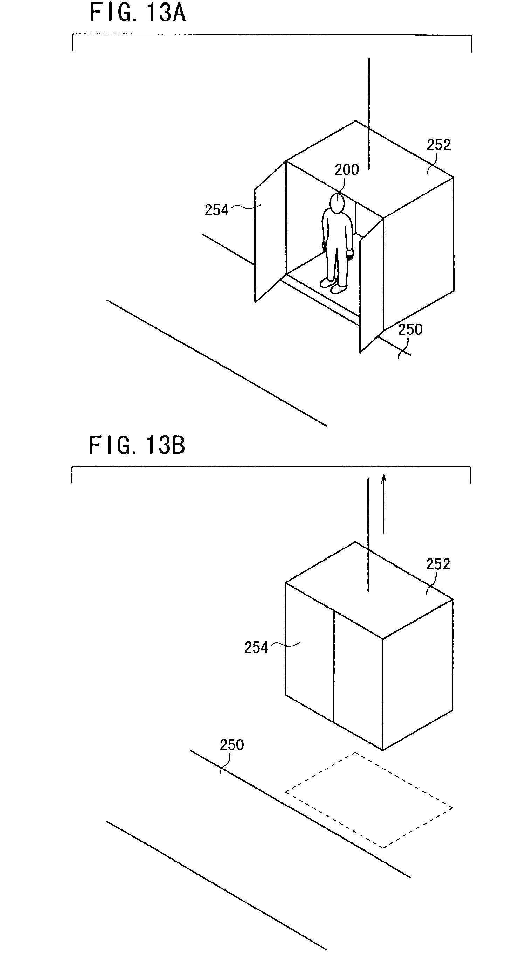

When the event branch indicator 240 is displayed, the user presses the button 112d, as a decision button, the event takes place. As shown in FIG. 13A, the doors 254 of the box 252 are opened, and the principal character 200 enters the box 252. Then, as shown in FIG. 13B, the doors 254 of the box 252 are closed, and the box 252 moves upwardly, whereupon the scene changes to another scene.

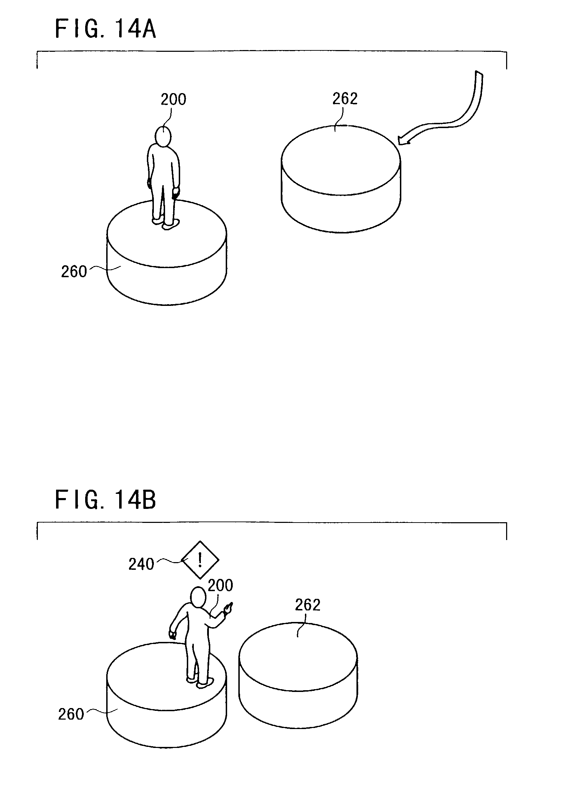

FIG. 14A shows the displayed image of another scene. In FIG. 14A, the principal character 200 is standing on a floating disk 260, and another floating disk 262 is moving toward the disk 260. Then, as shown in FIG. 14B, when the principal character 200 moves toward the other disk 260, the event branch indicator 240 is displayed above the head of the principal character 200.

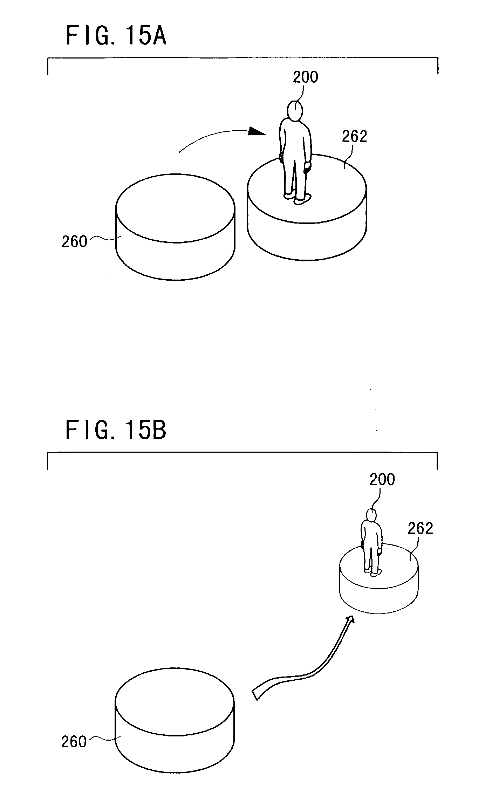

When the event branch indicator 240 is displayed, the user presses the decision button 112d, an event occurs. As shown in FIG. 15A, the principal character 200 jumps onto the other disk 262. Then, as shown in FIG. 15B, the disk 262 carrying the principal character 200 quickly moves away.

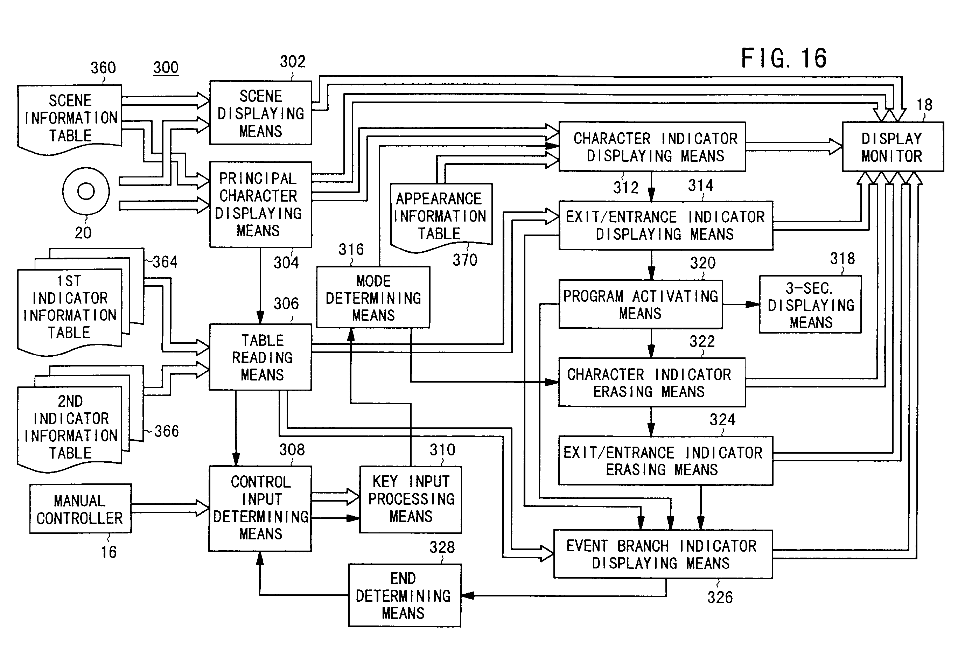

An example of software (indicator displaying means 300, see FIG. 16) for performing the first through fourth functions described above will be described below with reference to FIGS. 16 through 35.

The indicator displaying means 300 is supplied to the entertainment system 10 from a randomly accessible recording medium such as a CD-ROM or a memory card or from a network. It is assumed here that the indicator displaying means 300 is read from the optical disk 20 such as a CD-ROM into the entertainment apparatus 12 and run thereby.

The indicator displaying means 300 is downloaded in advance from the optical disk 20 played back by the entertainment apparatus 12 into the main memory in the control system 82 of the entertainment apparatus 12 according to a predetermined process, and executed by the CPU 80 in the control system 82.

As shown in FIG. 16, the indicator displaying means 300 comprises a scene displaying means 302 for reading image data of a scene to be displayed on the display monitor 18 and outputting the image data to the display monitor 18, a principal character displaying means 304 for displaying the principal character 200 at initial coordinates thereof in the scene, a table reading means 306 for reading various tables, a control input determining means 308 for deciding whether control data has been entered from the manual controller 16 or not, a key input processing means 310 for performing a process depending on entered control data, a character indicator displaying means 312 for displaying the character indicator 220 for indicating the position of the principal character 200, and an exit/entrance indicator displaying means 314 for displaying the exit/entrance indicators 232, 234, 236 for indicating the positions of the exits/entrances of the scene, the store 206, and the inn 208.

The indicator displaying means 300 also comprises a mode determining means 316 for determining the display mode of the character indicator 220 and the exit/entrance indicators 232, 234, 236, a program activating means 320 for activating a required program, i.e., a 3-sec. displaying means 318, a character indicator erasing means 322 for erasing the character indicator 220 based on the non-display mode, an exit/entrance indicator erasing means 324 for erasing the exit/entrance indicators 232, 234, 236 based on the non-display mode, an event branch indicator displaying means 326 for displaying the event branch indicator 240 for indicating branching off to another event, and an end determining means 328 for deciding whether there is an end request to finish the processing by the indicator displaying means 300 or not.

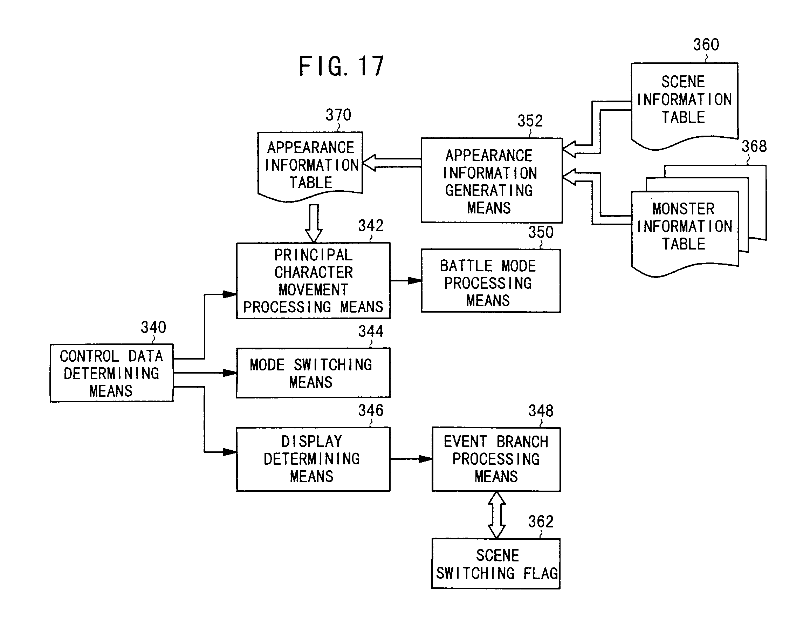

As shown in FIG. 17, the key input processing means 310 comprises a control data determining means 340 for determining entered control data, a principal character movement processing means 342 for moving the displayed principal character 200 based on input signals from the buttons 110a through 110d, which serve as direction buttons, a mode switching means 344 for switching between the continued display mode, the 3-sec. display mode, and the non-display modes for the indicators based on input signals from the L1, R1 buttons 114a, 116a, a display determining means 346 for deciding whether the event branch indicator 240 is currently being displayed or not, and an event branch processing means 348 for activating a program to cause a certain event to occur.

The principal character movement processing means 342 compares the coordinates of the principal character 200 and the coordinates where a monster will appear, and activates a battle mode processing means 350 if the distance between the compared coordinates falls in a predetermined range.

The coordinates where a monster will appear are generated by an appearance information generating means 352 which operates with the indicator displaying means 300 in a multitasking fashion.

The indicator displaying means 300 employs a scene information table 360, a scene switching flag 362, a first indicator information table 364, a second indicator information table 366, a monster information table 368, and an appearance information table 370.

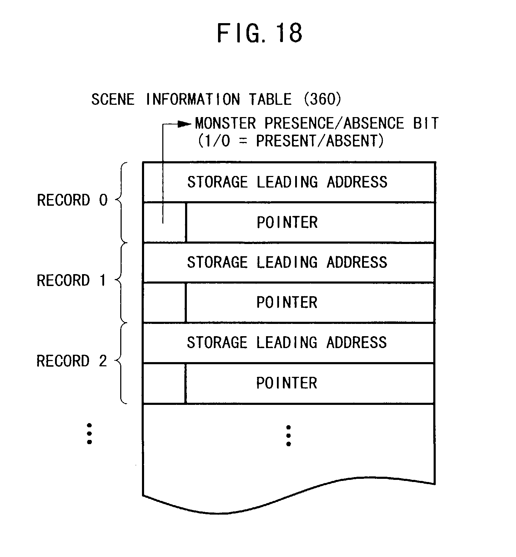

As shown in FIG. 18, the scene information table 360 stores a plurality of records which register respective storage leading addresses of storage areas where the image data of backgrounds of respective scenes are stored in the optical disk 20, for example. The records also register respective monster presence/absence bits each indicative of the appearance of a monster or not, and respective access indicators for the monster information table 368 in the case where a monster appears.

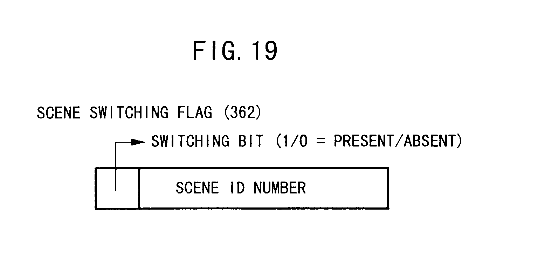

As shown in FIG. 19, the scene switching flag 362, which is used by a program that is activated by an event branch, stores a switching bit set through the program for switching to a scene, and the ID number of the scene to switch to.

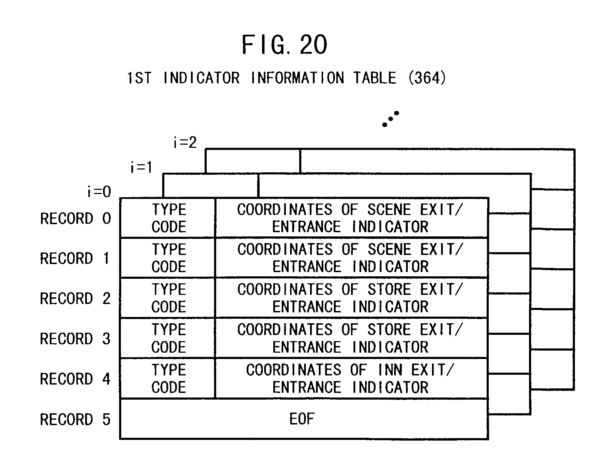

As shown in FIG. 20, the first indicator information table 364 includes as many tables as the number of scenes. Each first indicator information table 364 stores a plurality of records which register the coordinates of positions where the exit/entrance indicators 232, 234, 236 are to be displayed, and type codes of the exit/entrance indicators 232, 234, 236.

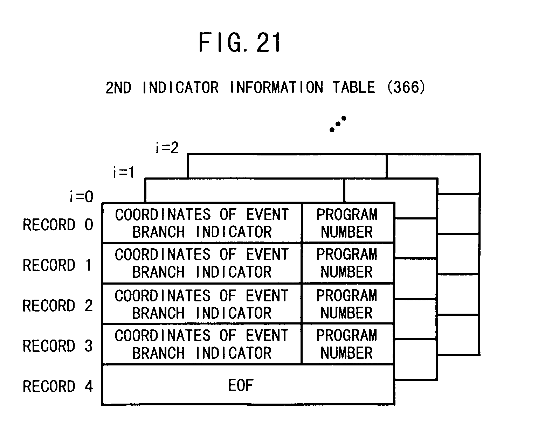

As shown in FIG. 21, the second indicator information table 366 also includes as many tables as the number of scenes. Each second indicator information table 366 stores a plurality of records which each register the coordinates of a position where the event branch indicator 240 is to be displayed, and a program number of a program that causes an event to occur.

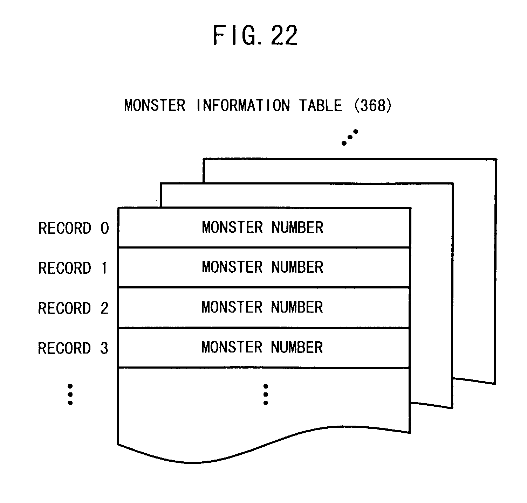

As shown in FIG. 22, the monster information table 368 includes as many tables as the number of scenes where a monster appears. Each monster information table 368 stores a plurality of records which each register a monster number of a monster to appear.

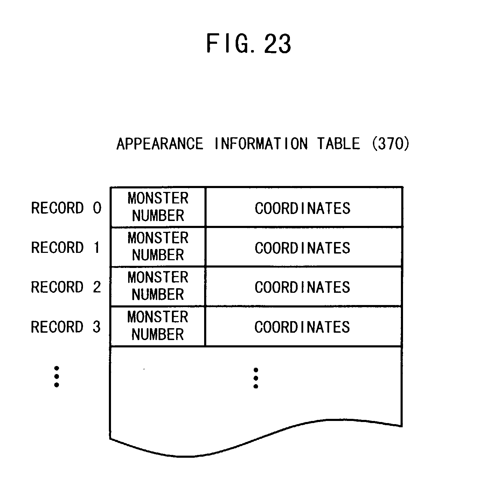

As shown in FIG.23, the appearance information table 370 comprises a plurality of records. Each record stores a monster number of a monster and coordinates indicative of a position where the monster appears.

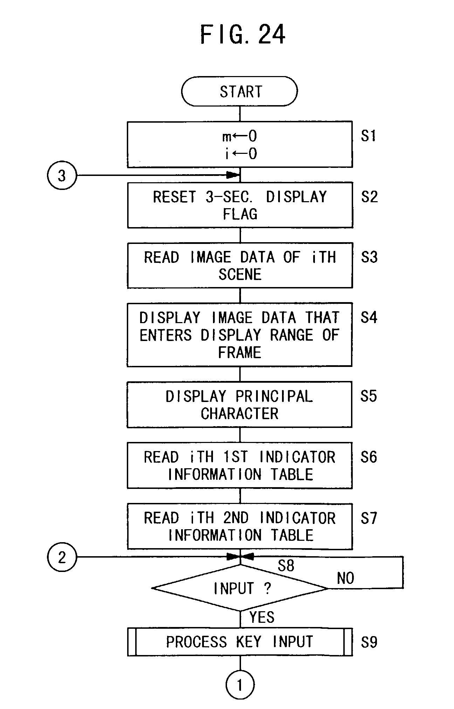

A processing sequence of the indicator displaying means 300 will be described below with reference to FIGS. 24 through 35.

In step S1 shown in FIG. 24, the indicator displaying means 300 stores an initial value "0" indicative of the non-display mode into an index register m used to switch between the display modes, thus initializing the index register m, and also stores an initial value "0" into an index register i used to retrieve scenes, thus initializing the index register i.

In step S2, the indicator displaying means 300 resets a 3-sec. display flag to "0". The 3-sec. display flag is used for interlocking in the 3-sec. display mode.

In step S3, the scene displaying means 302 reads the image data of an ith scene. Specifically, the scene displaying means 302 reads the storage leading address of the image data from an ith record in the scene information table 360, and reads the image data of the present scene from the storage leading address in the storage area where the image data is stored.

In step S4, the scene displaying means 302 displays image data in the display range of the frame 210 (see FIG. 9). Specifically, the scene displaying means 302 reads the display range (initial state) of the frame 210, stores the read display range in a predetermined storage area (display range storage area), and displays image data that enters the display range.

In step S5, the principal character displaying means 304 displays the principal character 200. Specifically, the principal character displaying means 304 reads initial coordinates of the principal character 200 from the ith record in the scene information table 360, and displays the principal character 200 at the position of the coordinates. The image data of the principal character 200 is read from the optical disk 20.

In step S6, the table reading means 306 reads an ith first indicator information table 364. In step S7, the table reading means 306 reads an ith second indicator information table 366.

In step S8, the control input determining means 308 decides whether control data has been entered from the manual controller 16 or not.

If control data has been entered from the manual controller 16, then control goes to step S9 in which the key input processing means 310 performs its own processing sequence, as described later on.

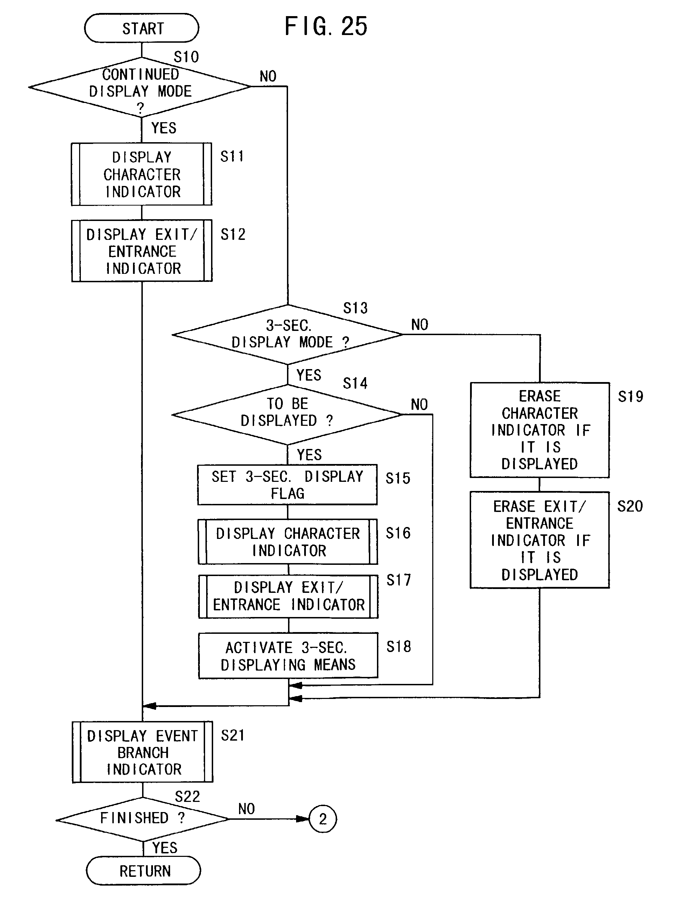

In step S10 shown in FIG. 25, the mode determining means 316 decides whether the present display mode is the continued display mode or not, based on the value of the index register m.

If the value of the index register m is "2", i.e., indicates the continued display mode, then control proceeds to step S11 in which the character indicator displaying means 312 performs its own processing sequence.

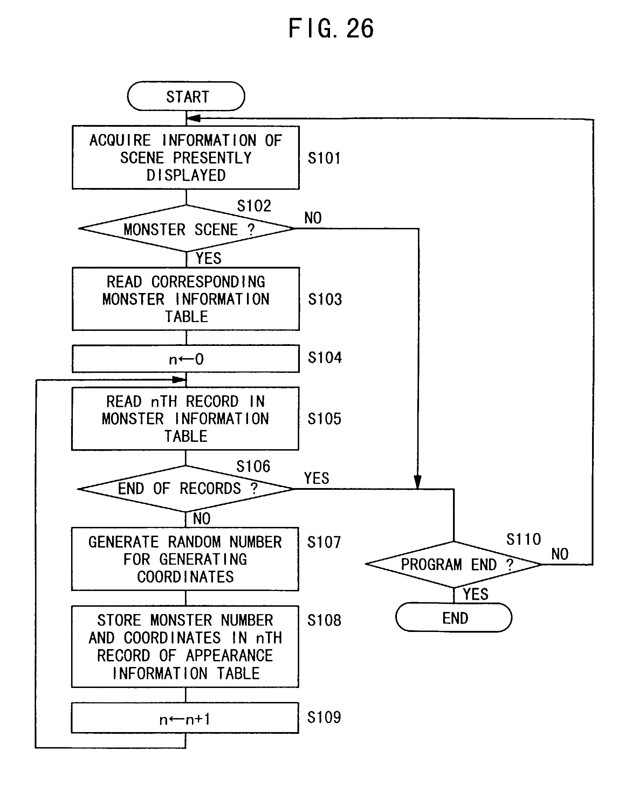

Prior to describing the processing by the character indicator displaying means 312, a processing sequence of the appearance information generating means 352 for generating the appearance information of a monster will be described below with reference to FIG. 26.

In step S101 shown in FIG. 26, the appearance information generating means 352 acquires the information of the scene that is presently displayed. Specifically, the appearance information generating means 352 reads a record corresponding to the presently displayed scene, out of the records in the scene information table 360.

In step S102, the appearance information generating means 352 decides whether the presently displayed scene is a scene where a monster appears or not, based on whether the monster presence/absence bit in the read record in the scene information table 360 is set to "1" or not.

If the presently displayed scene is a scene where a monster appears, then control goes to step S103. In step S103, the appearance information generating means 352 reads an access indicator for a monster information table 368 from the record in the scene information table 360, and reads the monster information table 368 corresponding to the access indicator.

In step S104, the appearance information generating means 352 stores an initial value "0" into an index register n used to retrieve a record from the monster information table 368, thus initializing the index register n.

In step S105, the appearance information generating means 352 reads the monster number from an nth record in the monster information table 368. In step S106, the appearance information generating means 352 decides whether the read monster number is EOF (End Of File) indicative of the end of records or not. If the read monster number is not EOF, then control goes to step S107 in which the appearance information generating means 352 generates a random number for generating coordinates.

In step S108, the appearance information generating means 352 stores the read monster number and coordinates generated by the generated random number into an nth record in the appearance information table 370.

In step S109, the appearance information generating means 352 increments the value of the index register n by 1. Thereafter, control goes back step S105 to read a next record from the monster information table 368.

If the read monster number is EOF in step S106, or if the presently displayed scene is not a scene where a monster appears in step S102, then control goes to step S110 which decides whether there is an end request for ending the program of the appearance information generating means 352. If there is no end request, then control goes back to step S101 to repeat the processing sequence. If there is an end request, then the processing sequence of the appearance information generating means 352 is brought to an end.

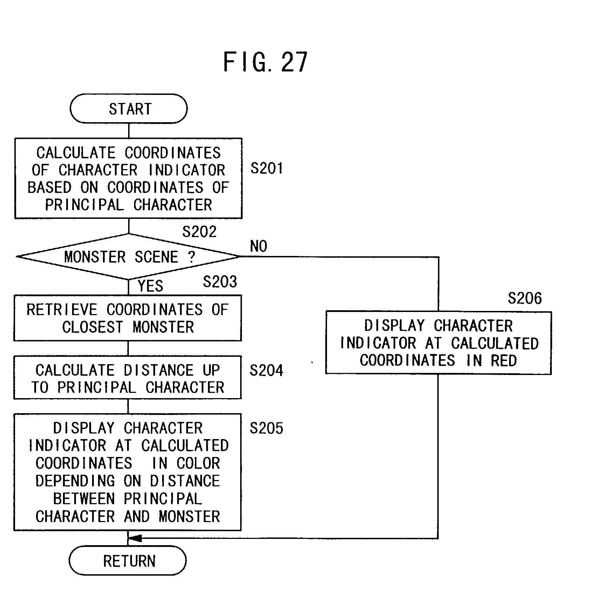

The processing sequence of the character indicator displaying means 312 will be described below with reference to FIG. 27.

In step S201 shown in FIG. 27, the character indicator displaying means 312 calculates coordinates of the character indicator 220 to be displayed near the principal character 200 based on the coordinates of the principal character 200.

In step S202, the character indicator displaying means 312 decides whether the presently displayed scene is a scene where a monster appears or not, based on whether the monster presence/absence bit in the ith record in the scene information table 360 is set to "1" or not.

If the presently displayed scene is a scene where a monster appears, then control proceeds to step S203. In step S203, the character indicator displaying means 312 retrieves coordinates (appearance coordinates) closest to the coordinates of the principal character 200, among the coordinates registered in the appearance information table 370 generated by the appearance information generating means 352.

In step S204, the character indicator displaying means 312 calculates the distance between the position where a monster appears and the principal character 200 from the retrieved appearance coordinates and the coordinates of the principal character 200.

In step S205, the character indicator displaying means 312 displays the character indicator 220 at the coordinates calculated in step S201 in a color corresponding to the distance calculated in step S204. At this time, as the principal character 200 moves toward the position where a monster appears, the color of the character indicator 220 changes from "blue" to "pale aqua" to "yellow" to "red".

If the presently displayed scene is not a scene where a monster appears, then control proceeds to step S206. In step S206, the character indicator displaying means 312 displays the character indicator 220 at the coordinates calculated in step S201 in red, for example.

After the processing in step S205 or the processing in step S206, the processing sequence of the character indicator displaying means 312 comes to an end.

Control returns to the main routine shown in FIG. 25. In step S12, the exit/entrance indicator displaying means 314 performs its own processing sequence.

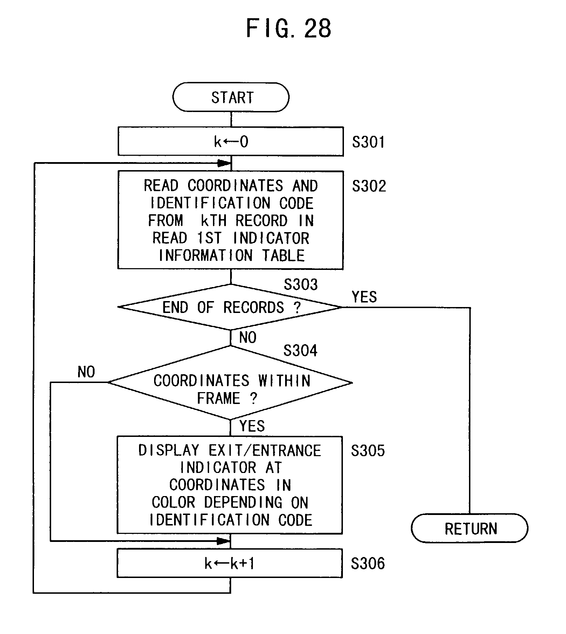

FIG. 28 shows the processing sequence of the exit/entrance indicator displaying means 314.

In step S301, the exit/entrance indicator displaying means 314 stores an initial value "0" into an index register k used to retrieve a record in the first indicator information table 364, thus initializing the index register k.

In step S302, the exit/entrance indicator displaying means 314 reads coordinates and a type code of the exit/entrance indicator 232, 234, or 236 from a kth record in the first indicator information table 364 that has been read.

In step S303, the exit/entrance indicator displaying means 314 decides whether the read record is EOF indicative of the end of records or not. If the read record is not EOF, then control goes to step S304 in which the exit/entrance indicator displaying means 314 decides whether the coordinates of the present exit/entrance indicator 232, 234, or 236 fall within the display range of the frame 210 or not. If the coordinates of the present exit/entrance indicator 232, 234, or 236 fall within the display range of the frame 210, then control proceeds to step S305. In step S305, the exit/entrance indicator displaying means 314 displays the exit/entrance indicator 232, 234, or 236 at the coordinates in a color depending on the type code.

If the type code represents the exit/entrance 226 of the scene, then the exit/entrance indicator displaying means 314 displays the exit/entrance indicator 232 at the coordinates in green, for example. If the type code represents the exit/entrance 228 of the store 206, then the exit/entrance indicator displaying means 314 displays the exit/entrance indicator 234 at the coordinates in blue, for example. If the type code represents the exit/entrance 230 of the inn 208, then the exit/entrance indicator displaying means 314 displays the exit/entrance indicator 236 at the coordinates in yellow, for example.

After the processing in step S305 or if the coordinates of the present exit/entrance indicator 232, 234, or 236 do not fall within the display range of the frame 210, then the exit/entrance indicator displaying means 314 increments the value of the index register k by 1 in step S306. Thereafter, control goes back to step S302 to display the exit/entrance indicator 232, 234, or 236 based on the information stored in a next record.

If the read record is EOF indicative of the end of records in step S303, then the processing sequence of the exit/entrance indicator displaying means 314 is ended.

Control then goes back to the main routine shown in FIG. 25. If the present display mode is not the continued display mode in step S10, then control goes to step S13 in which the mode determining means 316 decides whether the present display mode is the 3-sec. display mode or not.

If the value of the index register is "1", i.e., indicates the 3-sec. display mode, then control proceeds to step S14. In step S14, the mode determining means 316 decides whether the character indicator 220 and the present exit/entrance indicators 232, 234, 236 need to be displayed for 3 seconds or not, based on whether the 3-sec. display flag is reset or not.

If the 3-sec. display flag is reset, indicating that the character indicator 220 and the present exit/entrance indicators 232, 234, 236 need to be displayed for 3 seconds, then control goes to step S15 in which the 3-sec. display flag is set to "1", for example. Once the character indicator 220 and the present exit/entrance indicators 232, 234, 236 have been displayed for 3 seconds, they will not be displayed for 3 seconds in the same scene.

In step S16, the character indicator displaying means 312 performs its own processing sequence. In step S17, the exit/entrance indicator displaying means 314 performs its own processing sequence. In the processing sequences of the character indicator displaying means 312 and the exit/entrance indicator displaying means 314, the character indicator 220 is displayed near the principal character 200, the exit/entrance indicator 232 is displayed in green near the exit/entrance 226 of the scene, the exit/entrance indicator 234 is displayed in blue near the exit/entrance 228 of the store 206, and the exit/entrance indicator 236 is displayed in yellow near the exit/entrance 230 of the inn 208.

In step S18, the program activating means 320 activates the 3-sec. displaying means 318 which operates with the indicator displaying means 300 in a multitasking fashion.

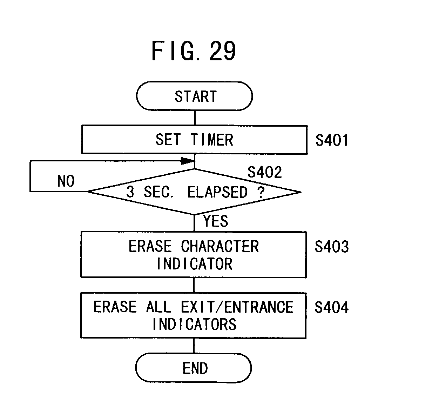

A processing sequence of the 3-sec. displaying means 318 will be described below with reference to FIG. 29.

In step S401 shown in FIG. 29, the 3-sec. displaying means 318 sets a timer. After having waited for 3 seconds to lapse in step S402, the character indicator erasing means 322 erases the character indicator 220 which has been displayed in step S403. In step S404, the exit/entrance indicator erasing means 324 erases all the exit/entrance indicators 232, 234, 236 which have been displayed.

After the processing in step S404, the processing sequence of the 3-sec. displaying means 318 is ended.

Control then returns to the main routine shown in FIG. 25. If the present display mode is not the 3-sec. display mode in step S13, i.e., if the present display mode is the non-display mode, then control goes to step S19. In step S19, if the character indicator 220 is presently displayed, then the character indicator erasing means 322 erases the character indicator 220. In step S20, if the present exit/entrance indicators 232, 234, 236 are presently displayed, then the exit/entrance indicator erasing means 324 erases all the displayed exit/entrance indicators 232, 234, 236.

After the processing in step S12, step S18 or step S20, or if the character indicator 220 and the present exit/entrance indicators 232, 234, 236 do not need to be displayed for 3 seconds in step S14, then control goes to step S21 in which the event branch indicator displaying means 326 performs its own processing sequence.

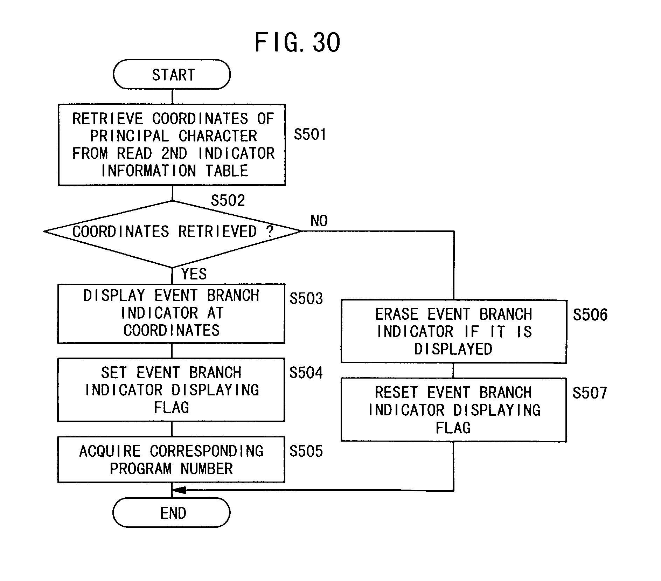

The processing sequence of the event branch indicator displaying means 326 is illustrated in FIG. 30.

In step S501 shown in FIG. 30, the event branch indicator displaying means 326 retrieves present coordinates of the principal character 200 from the coordinates stored in the read second indicator information table 366.

In step S502, the event branch indicator displaying means 326 decides whether coordinates have been retrieved or not. If retrieved, then control goes to step S503 in which the event branch indicator displaying means 326 displays the event branch indicator 240 at the retrieved coordinates.

In step S504, the event branch indicator displaying means 326 sets an event branch indicator displaying flag to "1". Then, in step S505, the event branch indicator displaying means 326 acquires a program number registered in the retrieved record.

If no coordinates have been retrieved in step S502, then control proceeds to step S506. In step S506, if the event branch indicator 240 is presently displayed, then the event branch indicator displaying means 326 erases the event branch indicator 240. In step S507, the event branch indicator displaying means 326 resets the event branch indicator displaying flag to "0".

After the processing in step S505 or the processing in step S507, the processing sequence of the event branch indicator displaying means 326 comes to an end.

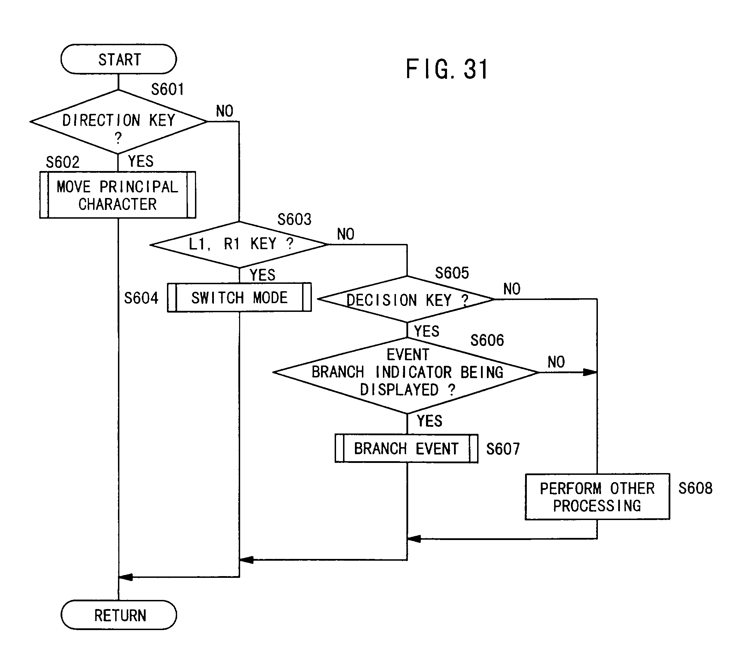

The processing sequence of the key input processing means 310 will be described below with reference to FIG. 31.

In step S601 shown in FIG. 31, the control data determining means 340 of the key input processing means 310 decides whether the entered control data comes from a direction button or not. If the entered control data comes from a direction button, then control goes to step S602 in which the principal character movement processing means 342 performs its own processing sequence.

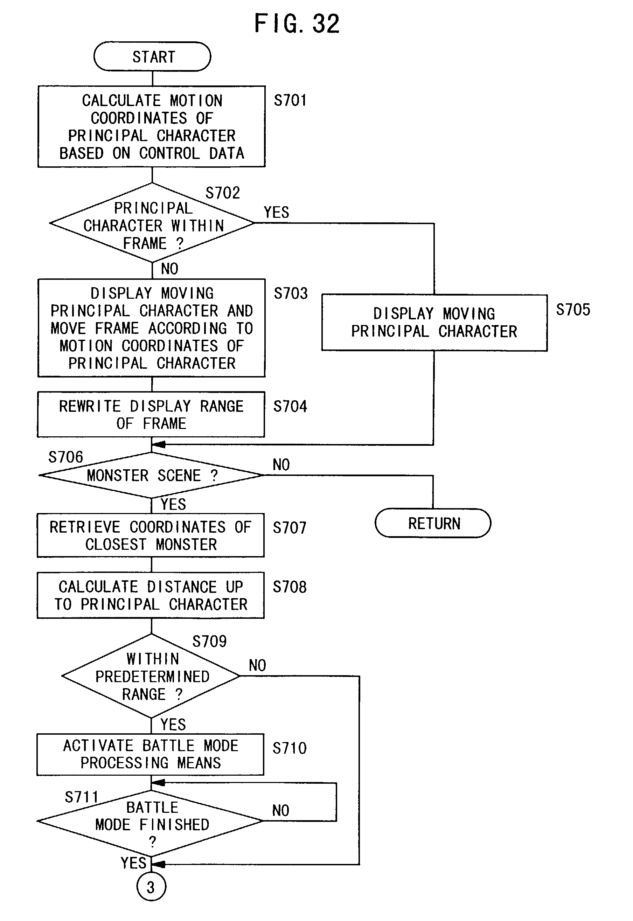

FIG. 32 shows the processing sequence of the principal character movement processing means 342.

In step S701 shown in FIG. 32, the principal character movement processing means 342 calculates motion coordinates of the principal character 200, i.e., coordinates to which the principal character 200 is to move, based on the present control data. Thereafter, the principal character movement processing means 342 decides whether the motion coordinates of the principal character 200 fall in the display range of the frame 210 or not in step S702.

If the motion coordinates of the principal character 200 do not fall in the display range of the frame 210, then control goes to step S703. In step S703, the principal character movement processing means 342 moves the displayed principal character 200 to the present motion coordinates, and moves the frame 210 by a distance corresponding to the motion coordinates.

In step S704, the principal character movement processing means 342 rewrites the display range of the frame 210 stored in the display range storage area with the present display range.

If the motion coordinates of the principal character 200 fall in the display range of the frame 210, then control goes to step S705 in which the principal character movement processing means 342 moves the displayed principal character 200 to the present motion coordinates.

After the processing in step S704 or the processing in step S705, control goes to step S706 in which the principal character movement processing means 342 decides whether the presently displayed scene is a scene where a monster appears or not, based on whether the monster presence/absence bit in the ith record in the scene information table 360 is set to "1" or not.

If the presently displayed scene is a scene where a monster appears, then control proceeds to step S707 in which the principal character movement processing means 342 retrieves coordinates (appearance coordinates) closest to the coordinates of the principal character 200, among the coordinates registered in the appearance information table 370 generated by the appearance information generating means 352.

In step S708, the principal character movement processing means 342 calculates the distance between the position where a monster appears and the principal character 200 from the retrieved appearance coordinates and the coordinates of the principal character 200.

In step S709, the principal character movement processing means 342 decides whether the calculated distance falls in a predetermined range or not. If the calculated distance falls in a predetermined range, then control goes to step S710 in which the battle mode processing means 350 is activated. A processing sequence of the battle mode processing means 350 will be described later on.

In step S711, the principal character movement processing means 342 waits for the processing sequence of the battle mode processing means 350 to come to an end. If the processing sequence of the battle mode processing means 350 is normally ended, i.e., if the game is not over, or if the calculated distance falls out of a predetermined range in step S709, then control returns to step S2 in the main routine of the indicator displaying means 300 shown in FIG. 24 for switching between scenes and displaying various indicators depending on the display mode.

If the presently displayed scene is a scene where a monster does not appear in step S706, then the processing sequence of the principal character movement processing means 342 is brought to an end.

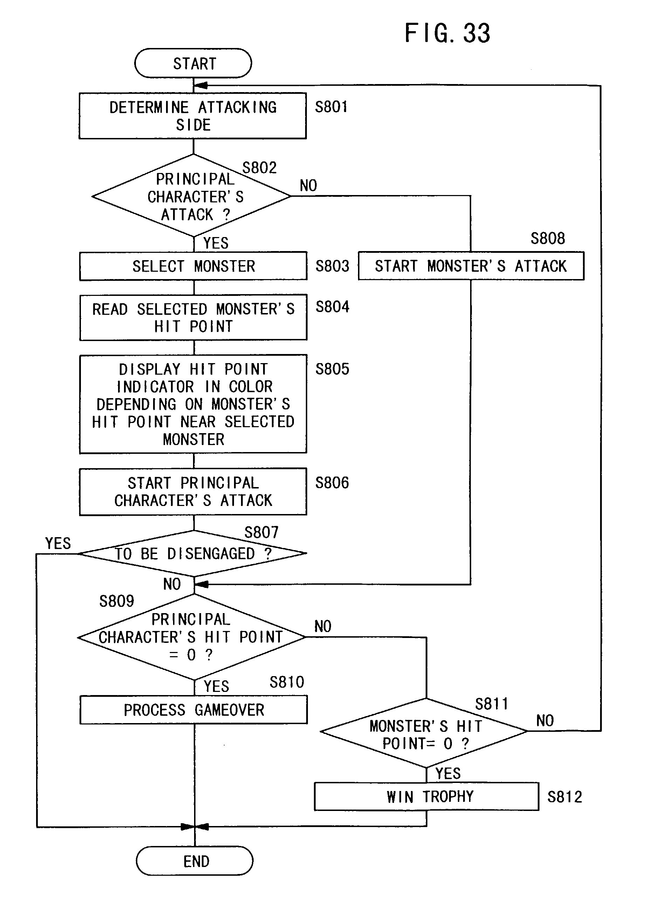

The processing sequence of the battle mode processing means 350 will be described below with reference to FIG. 33.

In step S801 shown in FIG. 33, the battle mode processing means 350 determines an attack side based on a random number or a predetermined sequence from the principal character to a monster to the principal character, for example.

In step S802, the battle mode processing means 350 decides whether an attack is to be waged by the principal character 200 or not. If an attack is to be waged by the principal character 200, then control goes to step S803 in which a monster is selected by a control input from the user.

In step S804, the battle mode processing means 350 reads the hit point of the selected monster. In step S805. the battle mode processing means 350 displays the hit point indicator 224 near the selected monster 222, as shown in FIGS. 11A through 11D. At this time, the hit point indicator 224 can be displayed in four different colors. Specifically, if the hit point of the monster 222 is consumed by 0 % to 25 %, then the hit point indicator 224 is displayed in "blue". If the hit point of the monster 222 is consumed by 26 % to 50 %, then the hit point indicator 224 is displayed in "pale aqua". If the hit point of the monster 222 is consumed by 51 % to 75 %, then the hit point indicator 224 is displayed in "yellow". If the hit point of the monster 222 is consumed by 76 % to 99 %, then the hit point indicator 224 is displayed in "red".

In step S806, the principal character 200 starts attacking the monster 222. In step S807, the battle mode processing means 350 decides whether the principal character 200 selects disengagement from the battle mode or not. If the principal character 200 selects disengagement from the battle mode, then the processing sequence of the battle mode processing means 350 is ended.

If an attack is to be waged by the monster 222 in step S802, then control goes to step S808 in which the monster 222 starts attacking the principal character 200.

If the principal character 200 does not select disengagement from the battle mode, or after the processing in step S808, control goes to step S809 in which the battle mode processing means 350 decides whether the hit point of the principal character 200 becomes "0" or not.

If the hit power of the principal character 200 becomes "0", then the battle mode processing means 350 performs a gameover process in step S810, after which the processing sequence of the battle mode processing means 350 is ended.

If the hit power of the principal character 200 does not become "0" in step S809, then the battle mode processing means 350 decides whether the hit points of all the monsters 222 become "0" or not in step S811.

If the hit points of all the monsters 222 do not become "0", then control goes back to step S801 in order for the principal character 200 or the monster 222 to wage an attack. If the hit points of all the monsters 222 become "0", then the principal character 200 wins a trophy in step S812. Thereafter, the processing sequence of the battle mode processing means 350 comes to an end.

Control returns to the routine shown in FIG. 31. If the entered control data does not come from a direction button, then control goes to step S603 in which the control data determining means 340 decides whether or not the entered control data comes from the L1 button 114a or the R1 button 116a.

If the entered control data comes from the L1 button 114a or the R1 button 116a, then control goes to step S604 in which the mode switching means 344 performs its own processing sequence.

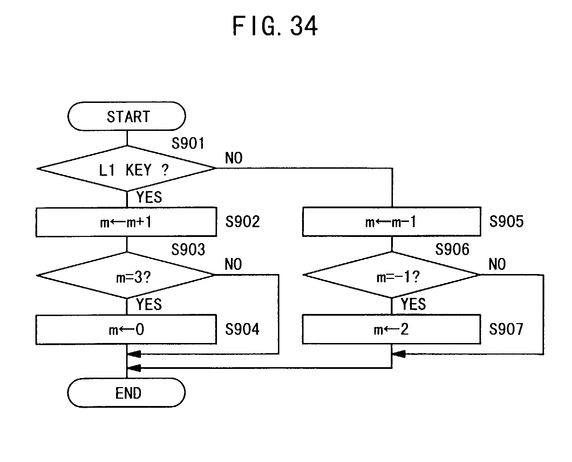

FIG. 34 shows the processing sequence of the mode switching means 344.

In step S901 shown in FIG. 34, the mode switching means 344 decides whether the present control data comes from the L1 button 114a or not.

If the present control data comes from the L1 button 114a, then control goes to step S902 in which the mode switching means 344 increments the value of the index register m by 1. Thereafter, the mode switching means 344 decides whether the value of the index register m is "3" or not in step S903. If m = 3, then control goes to step S904 in which the mode switching means 344 initializes the value of the index register m to "0". Therefore, the value of the index register m is cycled from "0" to "1" to "2" to "0".

If the present control data comes from the R1 button 116a, but not the L1 button 114a, then control goes to step S905 in which the mode switching means 344 decrements the value of the index register m by 1.

In step S906, the mode switching means 344 decides whether the value of the index register m is "- 1" or not. If m = - 1, then control goes to step S907 in which the mode switching means 344 sets the value of the index register m to "2". Therefore, the value of the index register m is cycled from "0" to "2" to "1" to "0".

After the processing in step S904 or the processing in step S907, or if the value of the index register m is not "3" in step S903 or if the value of the index register m is not - 1 in step S906, the processing sequence of the mode switching means 344 is ended.

Control goes back to the routine shown in FIG. 31. If the entered control data does not come from the L1 button 114a or the R1 button 116a, then control goes to step S605 in which the control data determining means 340 decides whether the entered control data comes from the decision button 112d or not.

If the entered control data comes from the decision button 112d, then control goes to step S606 in which the display determining means 346 decides whether the event branch indicator 240 is currently being displayed or not, based on whether the event branch indicator displaying flag has been set to "1" or not.

If the event branch indicator 240 is currently being displayed, then control proceeds to step S607 in which the event branch processing means 348 performs its own processing sequence.

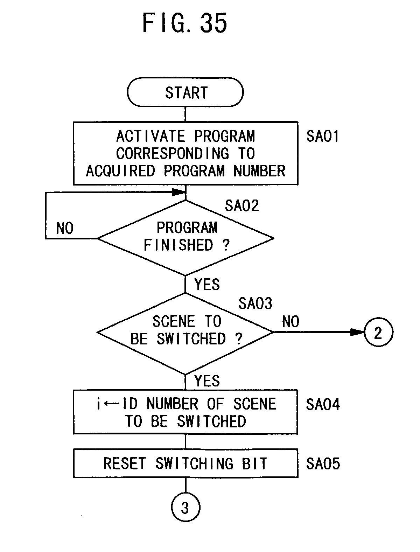

FIG. 35 shows the processing sequence of the event branch processing means 348.

In step SA01 shown in FIG. 35, the event branch processing means 348 activates a program corresponding to the program number acquired in step S505.

The activated program may be arranged, for example, to open the doors 254 of the box 252 and move the principal character 200 into the box 252, as shown in FIG. 13A, and then to close the doors 254 of the box 252 and move the principal character 200 together with the box 252 upwardly, as shown in FIG. 13B, or to move the principal character 200 onto the disk 262, as shown in FIG. 15A, and move the disk 262 away, as shown in FIG. 15B.

If the scene needs to switch to another scene after the box 252 is moved upwardly, as shown in FIG. 13B, then the activated program sets the switching bit of the scene switching flag 362 to "1" and stores the ID number of the scene to switch to into the scene switching flag 362.

In step SA02, the event branch processing means 348 waits for the activated program to be ended. When the activated program is ended, then control goes to step SA03 in which the event branch processing means 348 decides whether the scene needs to be switched or not, based on whether the switching bit of the scene switching flag 362 has been set to "1" or not.

If the scene needs to be switched, then control goes to step SA04 in which the event branch processing means 348 stores the ID number stored in the scene switching flag 362 into the index register i. Thereafter, the event branch processing means 348 resets the switching bit of the scene switching flag 362 in step SA05.

After the processing in step SA05, control goes back to step S2 in the main routine of the indicator displaying means 300 shown in FIG. 24 for switching between scenes and displaying various indicators depending on the display mode.

If the scene does not need to be switched in step SA03 shown in FIG. 35, then control goes back to step S8 in the main routine of the indicator displaying means 300 shown in FIG. 24 for waiting for next control data.

If the entertainment system 10 according the present embodiment is applied to a system for playing a role playing game, as described above, then the user can visually determine what objects are present in various scenes and can also expect what events will occur.

Therefore, the user is not required to move the principal character 200 around in one scene, and can move the principal character 200 adequately in anticipation of an event that will take plate in the scene.

Since the user is not required to move the principal character 200 around in one scene or is free from undesirable situations where the user can do nothing but see one scene for a long period of time, the user can maintain interest in the role playing game. As a result, the present invention contributes to an increase in the popularity of role playing games.

In the present embodiment, the event branch indicator 240 for indicating a branch to another event is displayed depending on a decision action made by the user. For example, when the principal character 200 moves in one scene in a role playing game according to a control input entered by the user, the event branch indicator 240 is displayed in a location where an event will occur. Consequently, the user can expect an event to take place in the location where the event branch indicator 240 is displayed, and can be interested in the occurrence of the event.

In the present embodiment, furthermore, different indicators are displayed in different colors. Accordingly, the user can identify a displayed indicator at once by recognizing its color, and is prevented from become confused by the simultaneous display of various different indicators.

Although a certain preferred embodiment of the present invention has been shown and described in detail, it should be understood that various changes and modifications may be made therein without departing from the scope of the appended claims.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

## Claims

1. An entertainment system comprising:
an entertainment apparatus (12) for executing various programs;
at least one manual controller (16) for entering manual control requests from the user into said entertainment apparatus (12);
a display unit (18) for displaying images outputted from said entertainment apparatus (12); and
indicator displaying means (300) for displaying an indicator for visually assisting the user on said display unit (18).

2. An entertainment system according to claim 1, wherein said indicator displaying means (300) comprises means for displaying an indicator (220) indicative of the position of a character (200) displayed on said display unit (18) and movable by a manual control request entered by the user.

3. An entertainment system according to claim 2, wherein said indicator displaying means (300) comprises means for changing a displayed color of said indicator (220) as said character (200) approaches a location where an event will occur.

4. An entertainment system according to claim 1, wherein said indicator displaying means (300) comprises means for displaying indicators (232, 234, 236) indicative of the positions of major spots in a scene displayed on said display unit (18).

5. An entertainment system according to claim 4, wherein said indicator displaying means (300) comprises means for displaying an indicator (232) indicative of the position of an exit/entrance (226) of the scene displayed on said display unit (18).

6. An entertainment system according to claim 4, wherein said indicator displaying means (300) comprises means for displaying an indicator (234) indicative of the position of an exit/entrance (228) of an object (206) related to the scene displayed on said display unit (18).

7. An entertainment system according to claim 4, wherein said indicator displaying means (300) comprises means for displaying an indicator (236) indicative of a location (208) where a parameter of said character (200) can be changed.

8. An entertainment system according to claim 1, wherein said indicator displaying means (300) comprises means for displaying an indicator (240) visually indicating that a special action can be made by the user.

9. An entertainment system according to claim 8, wherein said indicator displaying means (300) comprises means for displaying an indicator (240) indicative of a branch to another event according to a decision action made by the user.

10. An entertainment system according to any one of claims 1 to 9, wherein said indicator displaying means (300) comprises means for displaying different indicators in different colors.

11. An entertainment system according to claim 1, wherein said indicator displaying means (300) comprises means for displaying an indicator (220) indicative of a character (200, 222) displayed on said display unit (18) and changing a displayed color of said indicator (220) as a parameter of said character (200, 222) is changed.

12. An entertainment apparatus for connection to a manual controller (16) for outputting at least a control request from the user and a display unit (18) for displaying images, comprising:
indicator displaying means (300) for displaying an indicator for visually assisting the user on said display unit (18).

13. A recording medium storing a program and data for use in an entertainment system (10) having an entertainment apparatus (12) for executing various programs, at least one manual controller (16) for entering manual control requests from the user into said entertainment apparatus (12), and a display unit (18) for displaying images outputted from said entertainment apparatus (12), the program stored in said recording medium comprising the step of:
displaying an indicator for visually assisting the user on said display unit (18).

14. A recording medium according to claim 13, wherein said step of displaying an indicator comprises the step of displaying an indicator (220) indicative of the position of a character (200) displayed on said display unit (18) and movable by a manual control request entered by the user.

15. A recording medium according to claim 14, wherein said step of displaying an indicator comprises the step of changing a displayed color of said indicator (220) as said character (200) approaches a location where an event will occur.

16. A recording medium according to claim 13, wherein said step of displaying an indicator comprises the step of displaying indicators (232, 234, 236) indicative of the positions of major spots in a scene displayed on said display unit (18).

17. A recording medium according to claim 16, wherein said step of displaying an indicator comprises the step of displaying an indicator (232) indicative of the position of an exit/entrance (226) of the scene displayed on said display unit (18).

18. A recording medium according to claim 16, wherein said step of displaying an indicator comprises the step of displaying an indicator (234) indicative of the position of an exit/entrance (228) of an object (206) related to the scene displayed on said display unit (18).

19. A recording medium according to claim 16, wherein said step of displaying an indicator comprises the step of displaying an indicator (236) indicative of a location (208) where a parameter of said character (200) can be changed.

20. A recording medium according to claim 13, wherein said step of displaying an indicator comprises the step of displaying an indicator (240) visually indicating that a special action can be made by the user.

21. A recording medium according to claim 20, wherein said step of displaying an indicator comprises the step of displaying an indicator (240) indicative of a branch to another event according to a decision action made by the user.

22. A recording medium according to any one of claims 13 to 21, wherein said step of displaying an indicator comprises the step of displaying different indicators in different colors.

23. A recording medium according to claim 13, wherein said step of displaying an indicator comprises the step of displaying an indicator (220) indicative of a character (200, 222) displayed on said display unit (18) and changing a displayed color of said indicator (220) as a parameter of said character (200, 222) is changed.

24. A program readable and executable by a computer, for use in an entertainment system having an entertainment apparatus for executing various programs, at least one manual controller connected to the entertainment apparatus for entering manual control requests from the user into said entertainment apparatus, and a display unit for displaying at least one object, said program comprising the step of:
displaying an indicator for visually assisting the user on said display unit.
